# EUROPEAN PATENT APPLICATION

(11) **EP 3 454 447 A1**
(43) Date of publication of application: **13.03.2019**
(21) Application number: 17806995.1
(22) Date of filing: 31.05.2017
(51) Int. Cl.: H02J 7/02, H02J 50/80, H04B 5/00, H04N 19/10

(54) **METHOD FOR CONTROLLING CONNECTION BETWEEN ELECTRONIC DEVICE AND CHARGING DEVICE, AND DEVICE FOR PROVIDING SAME**

(30) Priority: 01.06.2016 KR 20160068319
(71) Applicant: Samsung Electronics Co., Ltd., Suwon-si, Gyeonggi-do 16677 (KR)
(72) Inventor: KWON, Soon-Youl, Yongin-si Gyeonggi-do 17108 (KR); KIM, Kyoung-Won, Yongin-si Gyeonggi-do 16953 (KR); KIM, Seong-Eun, Hwaseong-si Gyeonggi-do 18447 (KR); PARK, Jung-Sik, Suwon-si Gyeonggi-do 16682 (KR); CHO, Yu-Min, Seoul 07322 (KR); CHOI, Se-Hwan, Suwon-si Gyeonggi-do 16513 (KR); KIM, Kyung-Jung, Suwon-si Gyeonggi-do 16698 (KR); HONG, Hyun-Ju, Osan-si Gyeonggi-do 18111 (KR)
(74) Representative: HGF Limited
(86) International application number: PCT/KR2017/005666
(87) International publication number: WO 2017/209502

(57) **Abstract**

The present invention relates to an electronic device, and to a method for controlling a connection between an electronic device and a charging device, and a device for providing the same. To this end, the charging device of the present invention can comprise: a housing, which includes a first surface facing a first direction and a second surface facing a second direction different from the first direction, and is configured such that at least a part of the first surface comes in contact with a surface of a first electronic device; an electric conductive coil located within the housing so as to be closer to the first surface than the second surface; a wireless charging unit receiving power from an external power source, and including a charging circuit for wirelessly providing the power, having passed through the coil, to the first electronic device through the first surface; an electric connection unit exposed to the housing; a communication unit including a wireless communication circuit for supporting wireless communication with the first electronic device and allowing the wireless communication to have a predefined frequency range, and a wired communication circuit for receiving data from the first electronic device by using the wireless communication circuit, and transmitting the data to at least one second electronic device through the connection unit; and a processor for controlling, overall, an operation of the charging device in order to wirelessly charge the first electronic device.

## Description

### [Technical Field]

The present invention relates to electronic devices, and more specifically, to methods for controlling connection between an electronic device and a charger, and devices for providing the same.

### [Background Art]

Recently, electronic devices have been providing more diversified services and additional functions. To meet users' various needs and raise use efficiency of electronic devices, communication service carriers or device manufacturers are competing to develop electronic devices with differentiated and diverse functionalities. As an example of meeting such user demands, electronic devices may wirelessly receive power from chargers.

### [Detailed Description of the Invention]

### [Technical Problem]

There is conventionally disclosed (in, e.g., US 8,688,037) technology in which an electronic device wirelessly receives power from a charge, but not a method for transmitting and receiving data to/from a charger while wireless charging is performed.

Accordingly, the need arises for technology in which an electronic device is able to transmit and receive data to/from a charger during, or regardless of, wireless charging, and to transmit and receive data to/from at least one external electronic device connected with the charger.

### [Technical Solution]

Various embodiments of the present invention may raise the utility of electronic devices and enable data transmission/reception between an electronic device and an external electronic device via a charger.

To that end, according to various embodiments of the present invention, a charger may comprise a housing including a first surface facing in a first direction and a second surface facing in a second direction different from the first direction, at least part of the first surface configured to contact a surface of a first electronic device, a wireless charging unit including an electrical conductive coil positioned, in the housing, closer to the first surface than to the second surface and a charging circuit configured to receive power from an external power source and to wirelessly provide the power through the coil and the first surface to the first electronic device, an electrical connector exposed from the housing, a communication unit including a wireless communication circuit configured to support wireless communication having a predefined frequency range with the first electronic device and receive data from the first electronic device, and a wired communication circuit configured to transmit the data to at least one second electronic device via the connector, and a processor configured to overall control the operations of the charger in order to provide wireless charging to the first electronic device.

According to various embodiments of the present invention, a method for wirelessly providing power by a charger, the charger including a housing including a first surface facing in a first direction and a second surface facing in a second direction different from the first direction, at least part of the first surface configured to contact a surface of a first electronic device, an electrical conductive coil positioned, in the housing, closer to the first surface than to the second surface, and a charging circuit configured to receive power from an external power source and to wirelessly provide the power to the first electronic device, may comprise receiving data from the first electronic device through a wireless communication circuit having a predefined frequency range, and transmitting the received data to a second electronic device through a wired communication circuit.

According to various embodiments of the present invention, an electronic device may comprise a display, a sensor unit including at least one sensor, a wireless charging unit including a charging circuit configured to wirelessly receive power from a charger, a communication unit configured to transmit data to the charger through a wireless communication circuit configured to support wireless communication having a predefined frequency range with the charger, and a processor configured to change a setting to correspond to the charger through information received from the charger.

### [Advantageous Effects]

According to various embodiments of the present invention, an electronic device is able to transmit and receive data to/from a charger during, or regardless of, wireless charging and to transmit and receive data to/from at least one external electronic device connected with the charger. The present invention may also define an order for a charger and an electronic device with wireless charging and short-range communication functionality and provide a communication method that enables quick connectivity.

### [Brief Description of Drawings]

Fig. 1 is a view illustrating an electronic device 101 in a network environment 100 according to various embodiments;
Fig. 2 is a block diagram illustrating an electronic device 201 according to various embodiments;
Fig. 3 is a block diagram illustrating a program module according to various embodiments;
Fig. 4 is a view illustrating an example of connection among an electronic device, a charger, and at least one external electronic device connected to the charger, according to various embodiments of the present invention;
Fig. 5 is a view illustrating an example of an electronic device, a charger, and at least one external electronic device connected to the charger, according to various embodiments of the present invention;
Fig. 6 is a flowchart illustrating a process for connecting a charger with an electronic device requiring charging according to various embodiments of the present invention;
Fig. 7 is a flowchart illustrating a process for connecting a charger with an electronic device requiring charging according to various embodiments of the present invention;
Fig. 8 is a flowchart illustrating a process for connecting a charger with an electronic device not requiring charging according to various embodiments of the present invention;
Fig. 9 is a flowchart illustrating a process for connecting a charger with an electronic device not requiring charging according to various embodiments of the present invention;
Fig. 10 is a flowchart illustrating a process for identifying an identifier of a charger by an electronic device according to various embodiments of the present invention;
Fig. 11 is a flowchart illustrating a process for identifying an identifier of a charger by an electronic device according to various embodiments of the present invention;
Fig. 12 is a flowchart illustrating a process for transmitting, by a charger, information from at least one external electronic device to an electronic device according to various embodiments of the present invention;
Fig. 13 is a flowchart illustrating a process for varying, by an electronic device, a data path with a charger according to various embodiments of the present invention;
Fig. 14 is a flowchart illustrating a process for varying, by a charger, a data path with an electronic device according to various embodiments of the present invention;
Fig. 15 is a view illustrating an example of a system for forwarding data transmitted/received between an electronic device and at least one external electronic device according to various embodiments of the present invention;
Fig. 16 is a view illustrating an example in which a charger 410 performs data communication with another charger 1620 according to various embodiments of the present invention; and
Fig. 17 is a flowchart illustrating a process in which data is transmitted/received between an electronic device and at least one external electronic device according to various embodiments of the present invention.

### [Mode for Carrying out the Invention]

Hereinafter, embodiments of the present disclosure are described with reference to the accompanying drawings. However, it should be appreciated that the present disclosure is not limited to the embodiments, and all changes and/or equivalents or replacements thereto also belong to the scope of the present disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and/or order and are used to distinguish a component from another without limiting the components. For example, a first user device and a second user device may indicate different user devices from each other regardless of the order or importance of the devices. For example, a first component may be denoted a second component, and vice versa without departing from the scope of the present disclosure.

It will be understood that when an element (e.g., a first element) is referred to as being (operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

As used herein, the terms "configured (or set) to" may be interchangeably used with the terms "suitable for," "having the capacity to," "designed to," "adapted to," "made to," or "capable of' depending on circumstances. The term "configured (or set) to" does not essentially mean "specifically designed in hardware to." Rather, the term "configured to" may mean that a device can perform an operation together with another device or parts. For example, the term "processor configured (or set) to perform A, B, and C" may mean a generic-purpose processor (e.g., a CPU or application processor) that may perform the operations by executing one or more software programs stored in a memory device or a dedicated processor (e.g., an embedded processor) for performing the operations.

The terms as used herein are provided merely to describe some embodiments thereof, but not to limit the scope of other embodiments of the present disclosure. It is to be understood that the singular forms "a," "an," and "the" include plural references unless the context clearly dictates otherwise. The terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

For example, examples of the electronic device according to various embodiments may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a mobile medical device, a camera, or a wearable device. According to various embodiments, the wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device (e.g., an implantable circuit).

According to some embodiments, the electronic device may be a home appliance. Examples of the home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a TV box (e.g., Samsung HomeSync™, Apple TV™, or Google TV™), a gaming console (Xbox™, PlayStation™), an electronic dictionary, an electronic key, a camcorder, a charger, or an electronic picture frame.

According to other embodiments, examples of the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, automatic teller's machines (ATMs), point of sales (POS) devices, or internet of things (IoT) devices (e.g., a bulb, various sensors, an electric or gas meter, a sprinkler, a fire alarm, a thermostat, a street light, a toaster, fitness equipment, a hot water tank, a heater, or a boiler).

According to some embodiments, examples of the electronic device may at least one of part of a piece of furniture or building/structure, an electronic board, an electronic signature receiving device, a projector, or various measurement devices (e.g., devices for measuring water, electricity, gas, or electromagnetic waves). According to various embodiments, the electronic device may be one or a combination of the above-listed devices. According to some embodiments, the electronic device may be a flexible electronic device. The electronic device disclosed herein is not limited to the above-listed devices, and may include new electronic devices depending on the development of technology.

Hereinafter, electronic devices are described with reference to the accompanying drawings, according to various embodiments. As used herein, the term "user" may denote a human or another device (e.g., an artificial intelligent electronic device) using the electronic device.

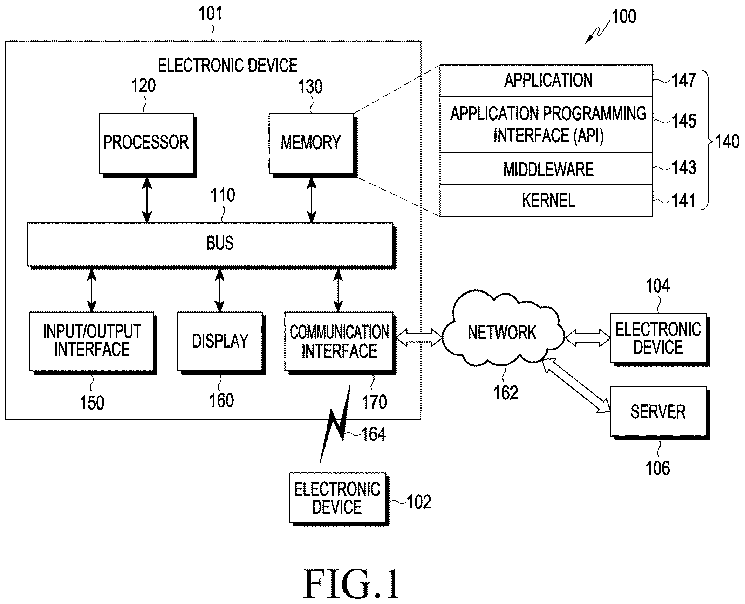

Fig. 1 is a view illustrating an electronic device 101 in a network environment 100 according to various embodiments.

The electronic device 101 may include a bus 110, a processor 120, a memory 130, an input/output interface 150, a display 160, and a communication interface 170. In some embodiments, the electronic device 101 may exclude at least one of the components or may add another component.

The bus 110 may include a circuit for connecting the components 110 to 170 with one another and transferring communications (e.g., control messages and/or data) between the components.

The processor 120 may include one or more of a central processing unit (CPU), an application processor (AP), or a communication processor (CP). The processor 120 may perform control on at least one of the other components of the electronic device 101, and/or perform an operation or data processing relating to communication.

The memory 130 may include a volatile and/or non-volatile memory. For example, the memory 130 may store commands or data related to at least one other component of the electronic device 101. According to an embodiment of the present invention, the memory 130 may store software and/or a program 140. The program 140 may include, e.g., a kernel 141, middleware 143, an application programming interface (API) 145, and/or an application program (or "application") 147. At least a portion of the kernel 141, middleware 143, or API 145 may be denoted an operating system (OS).

For example, the kernel 141 may control or manage system resources (e.g., the bus 110, processor 120, or a memory 130) used to perform operations or functions implemented in other programs (e.g., the middleware 143, API 145, or application program 147). The kernel 141 may provide an interface that allows the middleware 143, the API 145, or the application 147 to access the individual components of the electronic device 101 to control or manage the system resources.

The middleware 143 may function as a relay to allow the API 145 or the application 147 to communicate data with the kernel 141, for example.

Further, the middleware 143 may process one or more task requests received from the application program 147 in order of priority. For example, the middleware 143 may assign at least one of application programs 147 with priority of using system resources (e.g., the bus 110, processor 120, or memory 130) of at least one electronic device 101. For example, the middleware 143 may perform scheduling or load balancing on the one or more task requests by processing the one or more task requests according to the priority assigned to the at least one application program 147.

The API 145 is an interface allowing the application 147 to control functions provided from the kernel 141 or the middleware 143. For example, the API 133 may include at least one interface or function (e.g., a command) for filing control, window control, image processing or text control.

The input/output interface 150 may serve as an interface that may, e.g., transfer commands or data input from a user or other external devices to other component(s) of the electronic device 101. Further, the input/output interface 150 may output commands or data received from other component(s) of the electronic device 101 to the user or the other external device.

The display 160 may include, e.g., a liquid crystal display (LCD), a light emitting diode (LED) display, an organic light emitting diode (OLED) display, or a microelectromechanical systems (MEMS) display, or an electronic paper display. The display 160 may display, e.g., various contents (e.g., text, images, videos, icons, or symbols) to the user. The display 160 may include a touchscreen and may receive, e.g., a touch, gesture, proximity or hovering input using an electronic pen or a body portion of the user.

For example, the communication interface 170 may set up communication between the electronic device 101 and an external electronic device (e.g., a first electronic device 102, a second electronic device 104, or a server 106). For example, the communication interface 170 may be connected with the network 162 through wireless or wired communication to communicate with the external electronic device.

The wireless communication may use at least one of, e.g., long term evolution (LTE), long term evolution- advanced (LTE-A), code division multiple access (CDMA), wideband code division multiple access (WCDMA), universal mobile telecommunication system (UMTS), wireless broadband (WiBro), or global system for mobile communication (GSM), as a cellular communication protocol. Further, the wireless communication may include, e.g., short-range communication 164. The short-range communication 164 may include at least one of, e.g., wireless fidelity (Wi-Fi), Bluetooth, near-field communication (NFC), or global navigation satellite system (GNSS). The GNSS may include at least one of, e.g., global positioning system (GPS), global navigation satellite system (Glonass), Beidou navigation satellite system(hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, or plain old telephone service (POTS). The network 162 may include at least one of communication networks, e.g., a computer network (e.g., local area network (LAN) or wide area network (WAN)), Internet, or a telephone network.

The first and second external electronic devices 102 and 104 each may be a device of the same or a different type from the electronic device 101. According to an embodiment of the present invention, the server 106 may include a group of one or more servers. According to an embodiment of the present invention, all or some of operations executed on the electronic device 101 may be executed on another or multiple other electronic devices (e.g., the electronic devices 102 and 104 or server 106). According to an embodiment of the present invention, when the electronic device 101 should perform some function or service automatically or at a request, the electronic device 101, instead of executing the function or service on its own or additionally, may request another device (e.g., electronic devices 102 and 104 or server 106) to perform at least some functions associated therewith. The other electronic device (e.g., electronic devices 102 and 104 or server 106) may execute the requested functions or additional functions and transfer a result of the execution to the electronic device 101. The electronic device 101 may provide a requested function or service by processing the received result as it is or additionally. To that end, a cloud computing, distributed computing, or client-server computing technology may be used, for example.

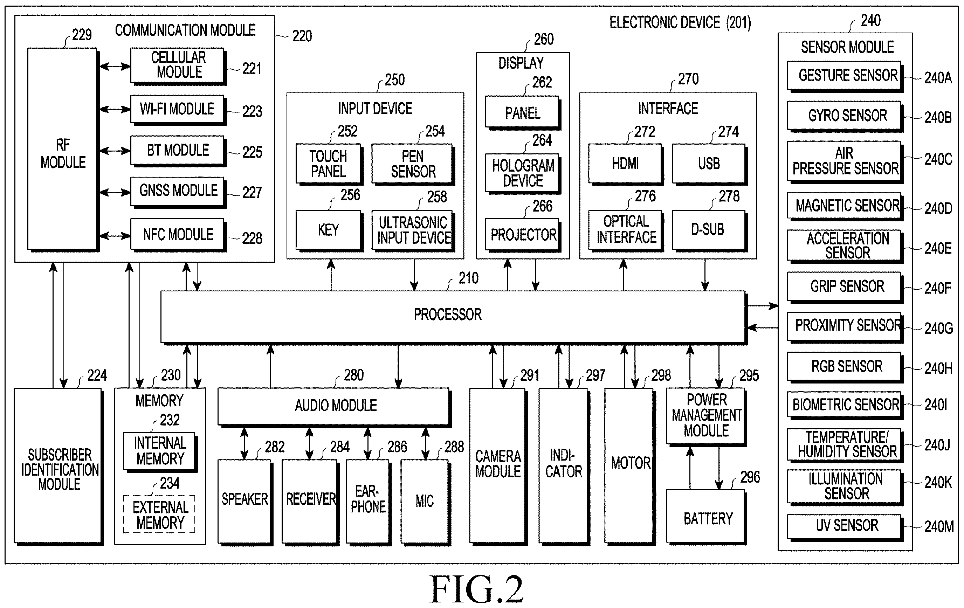

Fig. 2 is a block diagram illustrating an electronic device 201 according to various embodiments.

The electronic device 201 may include the whole or part of the configuration of, e.g., the electronic device 101 shown in Fig. 1. The electronic device 201 may include one or more processors (e.g., application processors (APs)) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 may control multiple hardware and software components connected to the processor 210 by running, e.g., an operating system or application programs, and the processor 210 may process and compute various data. The processor 210 may be implemented in, e.g., a system on chip (SoC). According to an embodiment of the present invention, the processor 210 may further include a graphic processing unit (GPU) and/or an image signal processor. The processor 210 may include at least some (e.g., the cellular module 221) of the components shown in Fig. 2. The processor 210 may load a command or data received from at least one of other components (e.g., a non-volatile memory) on a volatile memory, process the command or data, and store various data in the non-volatile memory.

The communication module 220 may have the same or similar configuration to the communication interface 170 of Fig. 1. The communication module 220 may include, e.g., a cellular module 221, a Wi-Fi module 223, a Bluetooth module 225, a GNSS module 227 (e.g., a GPS module, a Glonass module, a Beidou module, or a Galileo module), an NFC module 228, and a radio frequency (RF) module 229.

The cellular module 221 may provide voice call, video call, text, or Internet services through, e.g., a communication network. The cellular module 221 may perform identification or authentication on the electronic device 201 in the communication network using a subscriber identification module 224 (e.g., the SIM card). According to an embodiment, the cellular module 221 may perform at least some of the functions providable by the processor 210. according to an embodiment, the cellular module 221 may include a communication processor (CP).

The Wi-Fi module 223, the Bluetooth module 225, the GNSS module 227, or the NFC module 228 may include a process for, e.g., processing data communicated through the module. According to an embodiment of the present invention, at least some (e.g., two or more) of the cellular module 221, the Wi-Fi module 223, the Bluetooth module 225, the GNSS module 227, or the NFC module 228 may be included in a single integrated circuit (IC) or an IC package.

The RF module 229 may communicate data, e.g., communication signals (e.g., RF signals). The RF module 229 may include, e.g., a transceiver, a power amp module (PAM), a frequency filter, a low noise amplifier (LNA), or an antenna. According to another embodiment of the present invention, at least one of the cellular module 221, the Wi-Fi module 223, the Bluetooth module 225, the GNSS module 227, or the NFC module 228 may communicate RF signals through a separate RF module.

The subscription identification module 224 may include, e.g., a card including a subscriber identification module and/or an embedded SIM, and may contain unique identification information (e.g., an integrated circuit card identifier (ICCID) or subscriber information (e.g., an international mobile subscriber identity (IMSI)).

The memory 230 (e.g., the memory 130) may include, e.g., an internal memory 232 or an external memory 234. The internal memory 232 may include at least one of, e.g., a volatile memory (e.g., a dynamic RAM (DRAM), a static RAM (SRAM), a synchronous dynamic RAM (SDRAM), etc.) or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid state drive (SSD).

The external memory 234 may include a flash drive, e.g., a compact flash (CF) memory, a secure digital (SD) memory, a micro-SD memory, a min-SD memory, an extreme digital (xD) memory, a multi-media card (MMC), or a memory stick™. The external memory 234 may be functionally and/or physically connected with the electronic device 201 via various interfaces.

For example, the sensor module 240 may measure a physical quantity or detect an motion state of the electronic device 201, and the sensor module 240 may convert the measured or detected information into an electrical signal. The sensor module 240 may include at least one of, e.g., a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red-green-blue (RGB) sensor, a bio sensor 2401, a temperature/humidity sensor 240J, an illumination sensor 240K, or an Ultra Violet (UV) sensor 240M. Additionally or alternatively, the sensing module 240 may include, e.g., an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 240 may further include a control circuit for controlling at least one or more of the sensors included in the sensing module. According to an embodiment of the present invention, the electronic device 201 may further include a processor configured to control the sensor module 240 as part of the processor 210 or separately from the processor 210, and the electronic device 2701 may control the sensor module 240 while the processor 210 is in a sleep mode.

The input unit 250 may include, e.g., a touch panel 252, a (digital) pen sensor 254, a key 256, or an ultrasonic input device 258. The touch panel 252 may use at least one of capacitive, resistive, infrared, or ultrasonic methods. The touch panel 252 may further include a control circuit. The touch panel 252 may further include a tactile layer and may provide a user with a tactile reaction.

The (digital) pen sensor 254 may include, e.g., a part of a touch panel or a separate sheet for recognition. The key 256 may include e.g., a physical button, optical key or key pad. The ultrasonic input device 258 may sense an ultrasonic wave generated from an input tool through a microphone (e.g., the microphone 288) to identify data corresponding to the sensed ultrasonic wave.

The display 260 (e.g., the display 160) may include a panel 262, a hologram device 264, or a projector 266. The panel 262 may have the same or similar configuration to the display 160 of Fig. 1. The panel 262 may be implemented to be flexible, transparent, or wearable. The panel 262 may also be incorporated with the touch panel 252 in a module. The hologram device 264 may make three dimensional (3D) images (holograms) in the air by using light interference. The projector 266 may display an image by projecting light onto a screen. The screen may be, for example, located inside or outside of the electronic device 201. In accordance with an embodiment, the display 260 may further include a control circuit to control the panel 262, the hologram device 264, or the projector 266.

The interface 270 may include e.g., a high definition multimedia interface (HDMI) 272, a USB 274, an optical interface 276, or a D-subminiature (D-sub) 278. The interface 270 may be included in e.g., the communication interface 170 shown in Fig. 1. Additionally or alternatively, the interface 270 may include a mobile high-definition link (MHL) interface, a secure digital (SD) card/ multimedia card (MMC) interface, or infrared data association (IrDA) standard interface.

The audio module 280 may convert a sound into an electric signal or vice versa, for example. At least a part of the audio module 280 may be included in e.g., the input/output interface 145 as shown in Fig. 1. The audio module 280 may process sound information input or output through e.g., a speaker 282, a receiver 284, an earphone 286, or a microphone 288.

For example, the camera module 291 may be a device for recording still images and videos, and may include, according to an embodiment, one or more image sensors (e.g., front and back sensors), a lens, an Image signal processor (ISP), or a flash such as an LED or xenon lamp.

The power manager module 295 may manage power of the electronic device 201, for example. The electronic device 201 may be an electronic device powered by a battery, but is not limited thereto. Although not shown, according to an embodiment of the present invention, the power manager module 295 may include a power management Integrated circuit (PMIC), a charger IC, or a battery or fuel gauge. The PMIC may have a wired and/or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging. The battery gauge may measure an amount of remaining power of the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device, including e.g., a booting state, a message state, or recharging state. The motor 298 may convert an electric signal to a mechanical vibration and may generate a vibrational or haptic effect. Although not shown, a processing unit for supporting mobile TV, such as a GPU may be included in the electronic device 201. The processing unit for supporting mobile TV may process media data conforming to a standard for digital multimedia broadcasting (DMB), digital video broadcasting (DVB), or mediaFlo™.

Each of the aforementioned components of the electronic device may include one or more parts, and a name of the part may vary with a type of the electronic device. The electronic device in accordance with various embodiments of the present invention may include at lest one of the aforementioned components, omit some of them, or include other additional component(s). Some of the components may be combined into an entity, but the entity may perform the same functions as the components may do.

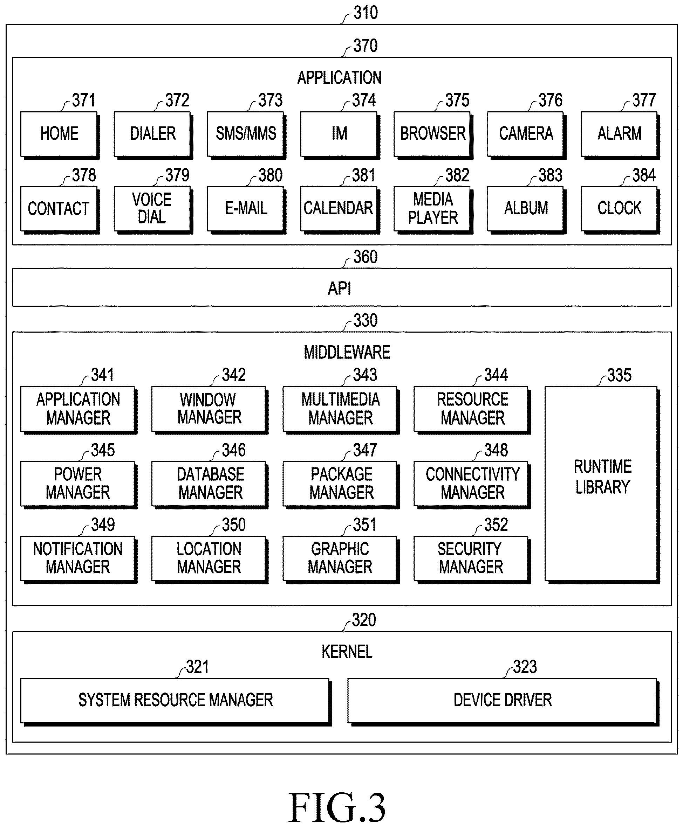

Fig. 3 is a block diagram illustrating a program module according to various embodiments.

According to an embodiment, the program module 310 (e.g., the program 140) may include an operating system (OS) controlling resources related to the electronic device (e.g., the electronic device 101) and/or various applications (e.g., the application processor 147) driven on the operating system. The operating system may include, e.g., Android™, iOS™, Windows™, Symbian™, Tizen™, or Samsung Bada™.

The program 310 may include, e.g., a kernel 320, middleware 330, an application programming interface (API) 360, and/or an application 370. At least a part of the program module 310 may be preloaded on the electronic device or may be downloaded from an external electronic device (e.g., the electronic devices 102 and 104 or server 106).

The kernel 320 (e.g., the kernel 141) may include, e.g., a system resource manager 321 and/or a device driver 323. The system resource manager 321 may perform control, allocation, or recovery of system resources. According to an embodiment of the present invention, the system resource manager 321 may include a process managing unit, a memory managing unit, or a file system managing unit. The device driver 323 may include, e.g., a display driver, a camera driver, a Bluetooth driver, a shared memory driver, a USB driver, a keypad driver, a Wi-Fi driver, an audio driver, or an inter-process communication (IPC) driver.

The middleware 330 may provide various functions to the application 370 through the API 360 so that the application 370 may efficiently use limited system resources in the electronic device or provide functions jointly required by applications 370. according to an embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while, e.g., the application 370 is being executed. The runtime library 335 may perform input/output management, memory management, or operation on arithmetic functions.

The application manager 341 may manage the life cycle of at least one application of, e.g., the applications 370. The window manager 342 may manage GUI resources used on the screen. The multimedia manager 343 may grasp formats necessary to play various media files and use a codec appropriate for a format to perform encoding or decoding on media files. The resource manager 344 may manage resources, such as source code of at least one of the applications 370, memory or storage space.

The power manager 345 may operate together with, e.g., a basic input/output system (BIOS) to manage battery or power and provide power information necessary for operating the electronic device. The database manager 346 may generate, search, or vary a database to be used in at least one of the applications 370. The package manager 347 may manage installation or update of an application that is distributed in the form of a package file.

The connectivity manager 348 may manage wireless connectivity, such as, e.g., Wi-Fi or Bluetooth. The notification manager 349 may display or notify an event, such as a coming message, appointment, or proximity notification, of the user without interfering with the user. The location manager 350 may manage locational information on the electronic device. The graphic manager 351 may manage graphic effects to be offered to the user and their related user interface. The security manager 352 may provide various security functions necessary for system security or user authentication. according to an embodiment, when the electronic device (e.g., the electronic device 101) has telephony capability, the middleware 330 may further include a telephony manager for managing voice call or video call functions of the electronic device.

The middleware 330 may include a middleware module forming a combination of various functions of the above-described components. The middleware 330 may provided a specified module per type of the operating system in order to provide a differentiated function. Further, the middleware 330 may dynamically omit some existing components or add new components.

The API 360 (e.g., the API 145) may be a set of, e.g., API programming functions and may have different configurations depending on operating systems. For example, in the case of Android or iOS, one API set may be provided per platform, and in the case of Tizen, two or more API sets may be offered per platform.

The application 370 (e.g., the application processor 147) may include one or more applications that may provide functions such as, e.g., a home 371, a dialer 372, a short message service (SMS)/multimedia messaging service (MMS) 373, an instant message (IM) 374, a browser 375, a camera 376, an alarm 377, a contact 378, a voice dial 379, an email 380, a calendar 381, a media player 382, an album 383, or a clock 384, a heath-care (e.g., measuring the degree of workout or blood sugar), or provision of environmental information (e.g., provision of air pressure, moisture, or temperature information).

According to an embodiment of the present invention, the application 370 may include an application (hereinafter, "information exchanging application" for convenience) supporting information exchange between the electronic device (e.g., the electronic device 101) and an external electronic device (e.g., the electronic devices 102 and 104). Examples of the information exchange application may include, but is not limited to, a notification relay application for transferring specific information to the external electronic device, or a device management application for managing the external electronic device.

For example, the notification relay application may include a function for relaying notification information generated from other applications of the electronic device (e.g., the SMS/MMS application, email application, health-care application, or environmental information application) to the external electronic device (e.g., the electronic devices 102 and 104). Further, the notification relay application may receive notification information from, e.g., the external electronic device and may provide the received notification information to the user.

The device management application may perform at least some functions of the external electronic device (e.g., the electronic device 102 or 104) communicating with the electronic device (for example, turning on/off the external electronic device (or some components of the external electronic device) or control of brightness (or resolution) of the display), and the device management application may manage (e.g., install, delete, or update) an application operating in the external electronic device or a service (e.g., call service or message service) provided from the external electronic device.

According to an embodiment of the present invention, the application 370 may include an application (e.g., a health-care application of a mobile medical device) designated according to an attribute of the external electronic device (e.g., the electronic devices 102 and 104). According to an embodiment of the present invention, the application 370 may include an application received from the external electronic device (e.g., the server 106 or electronic devices 102 and 104). According to an embodiment of the present invention, the application 370 may include a preloaded application or a third party application downloadable from a server. The names of the components of the program module 310 according to the shown embodiment may be varied depending on the type of operating system.

According to an embodiment of the present invention, at least a part of the program module 310 may be implemented in software, firmware, hardware, or in a combination of two or more thereof. At least a part of the programming module 310 may be implemented (e.g., executed) by e.g., a processor (e.g., the processor 210). At least a part of the program module 310 may include e.g., a module, program, routine, set of commands, process, or the like for performing one or more functions.

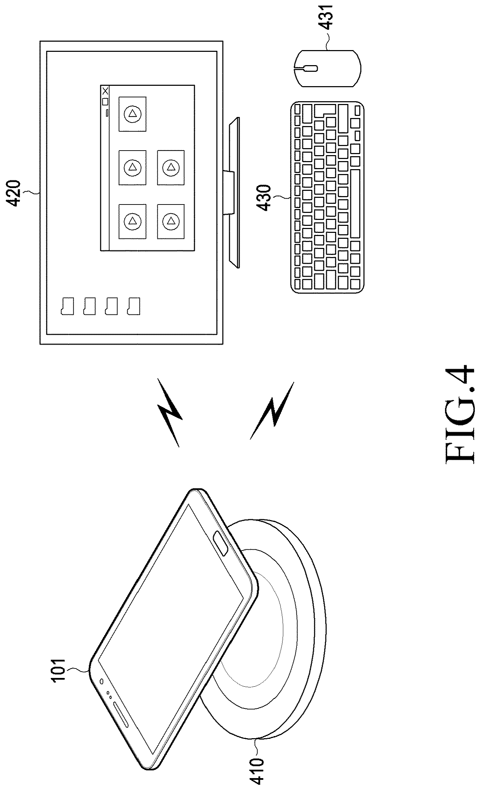

Fig. 4 is a view illustrating an example of connection among an electronic device, a charger, and at least one external electronic device connected to the charger, according to various embodiments of the present invention.

Referring to Fig. 4, according to various embodiments of the present invention, an electronic device 101 may wirelessly receive power from a charger 410. The electronic device 101 may include at least one coil that enables the electronic device 101 to wirelessly receive power from the charger 101. The charger 410 may include at least one coil for wirelessly providing power to the electronic device 101. The electronic device 101 may receive ping signals, trigger signals, or data from the charger 410. The electronic device 101 may perform data transmission/reception with the charger 410 while wireless charging is performed. The charger 410 may wirelessly provide power to the electronic device 101. The charger 410 may transmit/receive data to/from the electronic device 101 while wirelessly providing power to the electronic device 101. The charger 410 may wiredly or wirelessly be connected with at least one external electronic device 420, 430, and 431. The charger 410 may forward data transmitted/received between the electronic device 101 and the at least one external electronic device 420, 430, and 431. The charger 410 may transmit/receive data to/from the electronic device 101 in a predefined frequency range. The data contains uncompressed audio-visual data, and the predefined frequency range may include a range from 55GHz to 66GHz. Although the predefined frequency range of the present invention is specified to include a range from 55GHz to 66GHz, the predefined frequency range may include a smaller or larger frequency range.

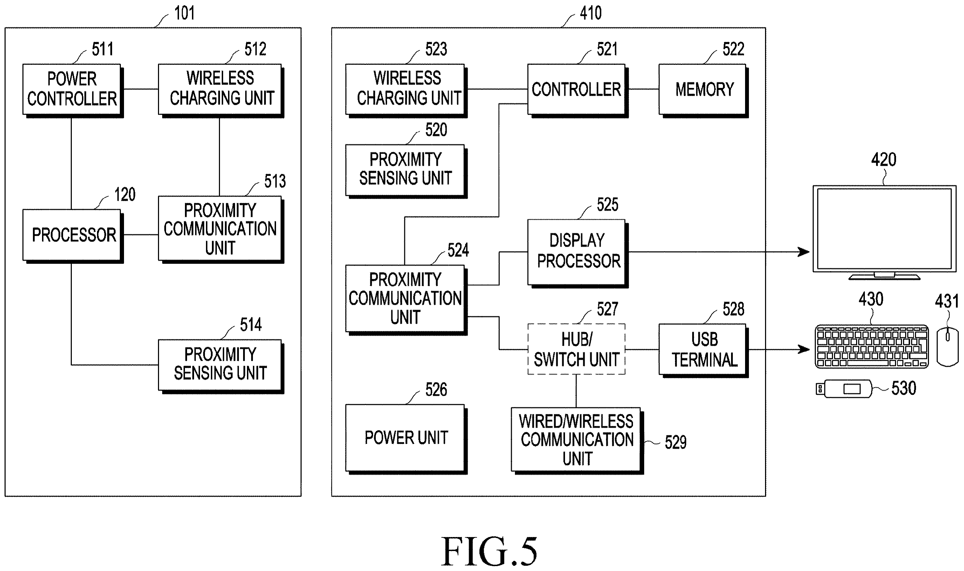

Fig. 5 is a view illustrating an example of an electronic device, a charger, and at least one external electronic device connected to the charger, according to various embodiments of the present invention.

Referring to Fig. 5, according to various embodiments of the present invention, the electronic device 101 may include a power controller 511, a wireless charging unit 512, a proximity communication unit 513, a proximity sensing unit 514, and a processor 120. Wireless proximity communication (e.g., 60GHz, WiGig, or WiFi) and wireless charging may be performed between the electronic device 101 and the charger 410. The charger 410 may be wiredly or wirelessly connected with an external electronic device. The charger 410 may be exclusively connected with a mouse 431, a keyboard 430, a USB 530, and a monitor 420.

According to various embodiments, the power controller 511 511 may supply power to one or more batteries (not shown) placed in the housing of the electronic device 101 under the control of the processor 120. One or more batteries (not shown) that may be included in the power controller 511 may supply power to the electronic device 101. According to an embodiment, the power controller 511 may supply power, which is input from an external power source (not shown) via a wire cable, to the electronic device 101. According to an embodiment, the power controller 511 may also supply power, which is wirelessly input from the charger 410 via wireless charging, to the electronic device 101. The power controller 511 may wirelessly receive power from the charger 410 via a wireless power transmission/reception conductive pattern (or coil) provided in the wireless charging unit 512.

According to various embodiments, the wireless charging unit 512 may wirelessly receive power from the charger 410 via light, laser beams, inductive coupling, or an interface for wirelessly receiving power from the charger 410, and the wireless charging unit 512 may perform data communication by using an available communication resource upon receiving the power. For example, upon using a reserved region of in-band data communication, the wireless charging unit 512 may transmit/receive initial information and other information as to whether proximity communication is possible or not, which may be used to recognize the supporting functionality of the charger 410. Or, when the charger able to play video is connected with the electronic device, the wireless charging unit 512 may automatically transmit video-related information to the charger, and if music playback is available, the wireless charging unit 512 may automatically transmit music-related information to the charger 410. The wireless charging unit 512 may include a charging circuit in order to wirelessly receive power from the charger 410. The wireless charging unit 512 may receive at least part of the information regarding the charger or information regarding a second electronic device connected with the charger from the charger 410. The wireless charging unit 512 may receive a ping signal from the charger, corresponding to detecting the charger 410.

According to various embodiments, the proximity communication unit 513 may perform data communication via a microcontroller including a converter chip or a display connector, a network connector, a USB hub, or an external input/output and/or storage unit, and may configure a communication hub via a PCLe scheme and a USB scheme. The proximity communication unit 513 may transmit/receive data to/from the charger 410 via a wireless communication circuit supporting wireless communication having a predefined frequency range with the charger 410. The predefined frequency range may include a range from 55GHz to 66GHz. The predefined frequency range may include not only the range from 55GHz to 66GHz but also a smaller or larger frequency range. The proximity communication unit 513 may receive at least part of the information regarding the charger or information regarding at least one external electronic device connected with the charger from the charger 410. If proximity communication with the charger 410 is rendered available via the proximity communication unit 513, the electronic device 101 may connect proximity communication with the charger via the proximity communication unit 513 and receive detailed information about the charger 410 from the charger 410.

According to various embodiments, the proximity sensing unit 514 may include at least one sensor. The proximity sensing unit 514 may perform at least one operation or function performed by the sensor module 240 of Fig. 2. The proximity sensing unit 514 may further include a control circuit for controlling at least one or more of the sensors included in the sensing module. According to an embodiment of the present invention, the electronic device 201 may further include a processor configured to control the sensor module 240 as part of the processor 210 or separately from the processor 210, and the electronic device 2701 may control the sensor module 240 while the processor 210 is in a sleep mode. The proximity sensing unit 514 may receive a trigger signal from the charger 410. The electronic device 201 may detect the charger 410 by using at least one of Bluetooth Low Energy (BLE), a pressure sensor, a proximity sensor, a magnet, NFC, or WiGig. The electronic device 201 may detect the charger 410 in various manners other than those described above and may receive a trigger signal corresponding to detecting the charger 410.

According to various embodiments, the processor 120 may perform at least one operation or function performed by the processor 120 of Fig. 1. The processor 120 may perform a control, communication-related computation, or data processing on at least one other component of the electronic device 201 and/or execute or control a wireless power transmission/reception mode. The processor 120 may control multiple hardware and software components connected to the processor 120 by running, e.g., an operating system or application programs, and the processor 210 may process and compute various data. The processor 120 may control the proximity sensing unit 514 with at least one sensor, the wireless charging unit 512 with a charging circuit for wirelessly receiving power from the charger 410, and the proximity communication unit 513 which transmits data to the charger via a wireless communication circuit supporting wireless communication having a predefined frequency range with the charger, and the processor 120 may vary the settings to correspond to the charger via information received from the charger 410. The processor 120 may control at least one of the wireless charging unit 512 and the proximity communication unit 513 to receive at least part of the information regarding the charger 410 or information regarding at least one external electronic device connected with the charger from the charger 410. Upon receiving a ping signal from the charger through the wireless charging unit 512 corresponding to detecting the charger 410, the processor 120 may determine whether the charger may perform proximity communication and wireless charging from the received ping signal. For example, if proximity communication with the charger 410 is possible, the processor 120 may connect proximity communication with the charger 410, receive detailed information about the charger 410 from the charger 410 via the connected proximity communication, change the settings necessary for the charger 410, and execute an application, based on at least part of at least one of the ping signal or the detailed information. For example, upon receiving a trigger signal from the charger 410 via the proximity sensing unit 514, the processor 120 may connect proximity communication with the charger 410, receive information regarding the charger from the charger 410 via the connected proximity communication, change the settings necessary for the charger 410, and execute an application, based on at least part of the information. Upon failing to receive a ping signal from the charger 410 within a predetermined time while connection with the charger 410 is maintained, the processor 120 may change the user interface and data path with the charger 410 and deactivate the proximity communication unit 513. If the external electronic device connected with the charger 410 is a video output device, the processor 120 may configure the screen displayed on the display 160 with the screen output from the video output device and transmit the same to the charger 410. The processor 120 may identify the characteristics (or specifications or properties) of the charger 410, determine what operations should be performed on the charger 410, and then perform the operations.

The charger 410 may include a proximity sensing unit 520, a wireless charging unit 523, a memory 522, a display processor 525, a proximity communication unit 524, a hub/switch unit 527, a USB terminal 528, a power unit 526, a wired/wireless communication unit 529, and a controller 521. The charger 410 may be connected with at least one of a TV 420, a keyboard 430, a mouse 431, and a USB 530. The charger 410 may exclusively be connected with the TV 420, the keyboard 430, the mouse 431, and the USB 530. If connected with at least one of the TV 420, the keyboard 430, the mouse 431, and the USB 530, the charger 410 may transmit information indicating the connection to the electronic device 101. The information may include information about the at least one external electronic device connected and setting information about the USB connected with the at least one external electronic device. The TV 420 may be connected with the display processor 525 of the charger 410, and the keyboard 430, the mouse 431, and the USB 530 may be connected with the USB terminal 528 of the charger 410.

According to various embodiments, the proximity sensing unit 520 may include at least one sensor. The proximity sensing unit 520 may further include a control circuit for controlling at least one or more of the sensors included in the sensing module. The proximity sensing unit 520 may transmit a trigger signal to the electronic device 101. The charger 410 may detect the electronic device 101 using at least one of BLE, a pressure sensor, a proximity sensor, a magnet, NFC, or WiGig. The charger 410 may detect the electronic device 101 in various manners other than those described above and may transmit, to the electronic device 101, a trigger signal corresponding to the detection.

According to various embodiments, the wireless charging unit 523 may wirelessly supply power to the electronic device 101 via light, laser beams, inductive coupling, or an interface for wirelessly providing power to the electronic device 101, and the wireless charging unit 523 may perform data communication using an available communication resource upon supplying the power. For example, upon using a reserved region of in-band data communication, the wireless charging unit 523 may transmit/receive initial information and other information as to whether near-field communication is possible or not, which may be used to recognize the supporting functionality of the electronic device 101. Or, the wireless charging unit 523 may transmit video-related data, which is received from an external electronic device capable of video playback, to the electronic device 101 and music-related information, which is received from an external electronic device capable of music playback, to the electronic device 101. The wireless charging unit 523 may include a charging circuit in order to provide power to the electronic device 101. The wireless charging unit 523 may transmit at least part of the information regarding the charger or information regarding at least one external electronic device connected with the charger to the charger 101. The wireless charging unit 523 may transmit a ping signal to the electronic device, corresponding to detecting the electronic device 101.

According to various embodiments, the memory 522 may store an identifier of the external electronic device. Or, the memory 522 may store information about a group of the at least one external electronic device. Or, the memory 522 may store data transmitted/received between the electronic device 101 and the at least one external electronic device.

According to various embodiments, the proximity communication unit 524 may transmit/receive data to/from the electronic device 101 via a wireless communication circuit supporting wireless communication having a predefined frequency range. The predefined frequency range may include a range from 55GHz to 66GHz. The predefined frequency range may include not only the range from 55GHz to 66GHz but also a smaller or larger frequency range. The proximity communication unit 524 may transmit at least part of the information regarding the charger 410 or information regarding at least one external electronic device connected with the charger 410 to the electronic device 101. If proximity communication with the electronic device 101 is rendered available via the proximity communication unit 524, the charger 410 may connect proximity communication with the electronic device 101 via the proximity communication unit 524 and transmit detailed information about the charger 410 to the electronic device 101. The proximity communication unit 524 may perform data communication via a microcontroller including a converter chip or a display connector, a network connector, a USB hub, or an external input/output and/or storage unit and may easily connect with the electronic device 101.

According to various embodiments, the display processor 525 may transmit video-related data, which is received from the electronic device 101, to an external electronic device, e.g., the TV 420. The display processor 525 may transmit the video-related data to the video playback device via the USB or HDMI terminal.

According to various embodiments, the hub/switch unit 527 may switch between the USB terminal 528 and the wired/wireless communication unit 529 to control data transmission/reception. For example, when the external electronic device playing data transmitted/received is connected with the charger 410 via the USB terminal 528, the hub/switch unit 527 may switch transmitted/received data to the USB terminal 528. When the external electronic device playing data transmitted/received is connected with the charger 410 via the wired/wireless communication unit 529, the hub/switch unit 527 may switch transmitted/received data to the wired/wireless communication unit 529.

According to various embodiments, the USB terminal 528 may include a terminal enabling connection of at least one USB. The USB terminal 528 may be connected with at least one of the keyboard 430, the mouse 431, or the USB 530. The USB terminal 528 may be connected with the TV 420.

According to various embodiments, the wired/wireless communication unit 529 may be connected with at least one external electronic device, via LAN or Wi-Fi, and perform communication. The wired/wireless communication unit 529 may include a communication module for enabling communication with the external electronic device, other than LAN or Wi-Fi.

According to various embodiments, the power unit 526 may receive alternating current (AC) power (e.g., 220V) from the outside and convert the received AC power into direct current (DC) power. The power unit 526 may typically receive power from the outside by plugging the terminal of the charger 410 into a wall outlet. The power unit 526 may convert the 220V AC power received from the outside into 9V DC power. The power unit 526 may include a variable DC/DC device capable of boosting the converted 5V or 9V DC power to 10V - 20V.

According to various embodiments, the controller 521 may control the overall operation of the charger 410 to wirelessly provide power to the electronic device 101 via an electrically conductive coil confirmed on the surface of the charger 410. The controller 521 may transmit at least part of the information regarding the charger 410 or information regarding at least one external electronic device connected with the charger 410 to the electronic device 101 via at least one of the wireless charging unit 523 or the proximity communication unit 524. The controller 521 may determine whether the electronic device 101 may perform proximity communication and wireless charging, corresponding to receiving a response signal to the ping signal transmitted to the electronic device 101. For example, if the electronic device 101 may perform proximity communication, the controller 521 may transmit detailed information about the charger 410 to the electronic device 101 via the wireless charging unit 523. The detailed information may include at least one of the identifier, status, specifications, authentication, or security of the charger. For example, upon detecting an electronic device 101 which does not require charging, the controller 521 may transmit the information regarding the charger 410 to the electronic device 101 via the proximity communication unit 524. Upon receiving information containing the identifiers, which correspond to the connection with at least one external electronic device, the controller 521 may classify the at least one external electronic device via the received identifiers and transmit the result of the classification to the electronic device 101. The controller 521 may classify the at least one external electronic device connected, depending on priority or type. Upon failing to receive, from the electronic device 101, a response signal to the transmitted ping signal within a predetermined time while connection with the electronic device 101 is maintained, the controller 521 may deactivate the proximity communication with the electronic device 101. The controller 521 may identify the electronic device 101, transmit information so that the charger 410 may be recognized by the electronic device 101, switch it into a communicable state, and may be configured accordingly or used in association with wireless charging or proximity communication.

If the electronic device 101 is connected with the charger 410, the present invention may identify whether proximity communication is present or not via in-band communication of wireless charging, the type of communication, functions supported by the charger 410, and basic mode information about the charger 410, activate the proximity communication circuit unit, and transmit/receive appropriate signals using the information about the electronic device 101 and the charger 410. If the electronic device 101 is connected with the charger 410, the present invention may transmit information as to whether there is the electronic device 101 or not and relevant information via the wireless charging power, and if information transmission is complete, charging may start. At this time, in-band communication proceeds to transmit/receive the relevant information, and its idle frame (reserved region) may be used additionally for communication. The present invention may quickly transmit a large volume of data via proximity communication between the electronic device 101 and the charger 410. The electronic device 101 may provide a streaming service to the charger 410 or a video playback device connected with the charger.

According to various embodiments of the present invention, a charger may comprise a housing including a first surface facing in a first direction and a second surface facing in a second direction different from the first direction, at least part of the first surface configured to contact (or not contact) a surface of a first electronic device, a wireless charging unit including an electrical conductive coil positioned, in the housing, closer to the first surface than to the second surface and a charging circuit configured to receive power from an external power source and to wirelessly provide the power through the coil and the first surface to the first electronic device, an electrical connector exposed from the housing, a communication unit including a wireless communication circuit configured to support wireless communication having a predefined frequency range with the first electronic device and receive data from the first electronic device, and a wired communication circuit configured to transmit the data to at least one second electronic device via the connector, and a processor configured to overall control the operations of the charger in order to provide wireless charging to the first electronic device.

According to an embodiment, the charger may not include a display unit configured to display an image.

According to an embodiment, the connector may include a high definition multimedia interface (HDMI) terminal and/or a universal serial bus (USB) terminal.

According to an embodiment, the data received from the first electronic device may include uncompressed, audio-visual data.

According to an embodiment, the predefined frequency range may include a range from 55GHz to 66GHz.

According to an embodiment, the processor may be configured to transmit at least part of the information regarding the charger or information regarding the second electronic device connected with the charger to the first electronic device through at least one of the wireless charging unit or the communication unit.

According to an embodiment, upon detecting the first electronic device requiring charging, the wireless charging unit may be configured to transmit a ping signal containing information regarding the charger to the first electronic device.

According to an embodiment, the information regarding the charger may include at least one of whether proximity communication can be performed, communication scheme types, whether there is a memory or not, or data types supported by the charger.

According to an embodiment, the processor may be configured to determine whether the first electronic device may perform proximity communication and wireless charging, corresponding to receiving a response signal to the transmitted ping signal.

According to an embodiment, if the first electronic device can perform proximity communication, the processor may transmit detailed information about the charger to the first electronic device through the wireless charging unit.

According to an embodiment, the detailed information may include at least one of the identifier, status, specifications, authentication, or security of the charger.

According to an embodiment, upon detecting the first electronic device that does not require charging, the processor may be configured to transmit information regarding the charger to the first electronic device through the communication unit.

According to an embodiment, upon receiving information containing an identifier corresponding to the connection with the at least one second electronic device, the processor may be configured to classify the at least one second electronic device via the received identifier and to transmit the result of the classification to the first electronic device.

According to an embodiment, the processor may be configured to classify the at least one connected second electronic device depending on priority or type.

According to an embodiment, upon failing to receive, from the first electronic device, a response signal to a transmitted ping signal within a predetermined time while remaining connected with the first electronic device, the processor may be configured to deactivate proximity communication with the first electronic device.

According to various embodiments of the present invention, an electronic device may comprise a display, a sensor unit including at least one sensor, a wireless charging unit including a charging circuit configured to wirelessly receive power from a charger, a communication unit configured to transmit data to the charger through a wireless communication circuit configured to support wireless communication having a predefined frequency range with the charger, and a processor configured to change a setting to correspond to the charger through information received from the charger.

According to an embodiment, the data may include uncompressed, audio-visual data.

According to an embodiment, the predefined frequency range may include a range from 55GHz to 66GHz.

According to an embodiment, at least one of the wireless charging unit and the communication unit may be configured to receive at least part of the information regarding the charger or information regarding a second electronic device connected with the charger from the charger.

According to an embodiment, upon receiving a ping signal from the charger through the wireless charging unit corresponding to detecting the charger, the processor may be configured to determine whether the charger may perform proximity communication and wireless charging from the received ping signal.

According to an embodiment, if proximity communication with the charger is possible, the processor may connect proximity communication with the charger, receive detailed information about the charger from the charger via the connected proximity communication, change the settings necessary for the charger, and execute an application, based on at least part of at least one of the ping signal or the detailed information.

According to an embodiment, upon receiving a trigger signal from the charger via the sensor unit, the processor may connect proximity communication with the charger, receive information regarding the charger from the charger via the connected proximity communication, change the settings necessary for the charger, and execute an application, based on at least part of the information.

According to an embodiment, upon failing to receive a ping signal from the charger within a predetermined time while remaining connected with the charger, the processor may change the data path with the charger and the user interface and deactivate the proximity communication with the charger.

According to an embodiment, if the second electronic device is a video output device, the processor may configure the screen displayed on the display with the screen output from the video output device and transmit the same to the charger.

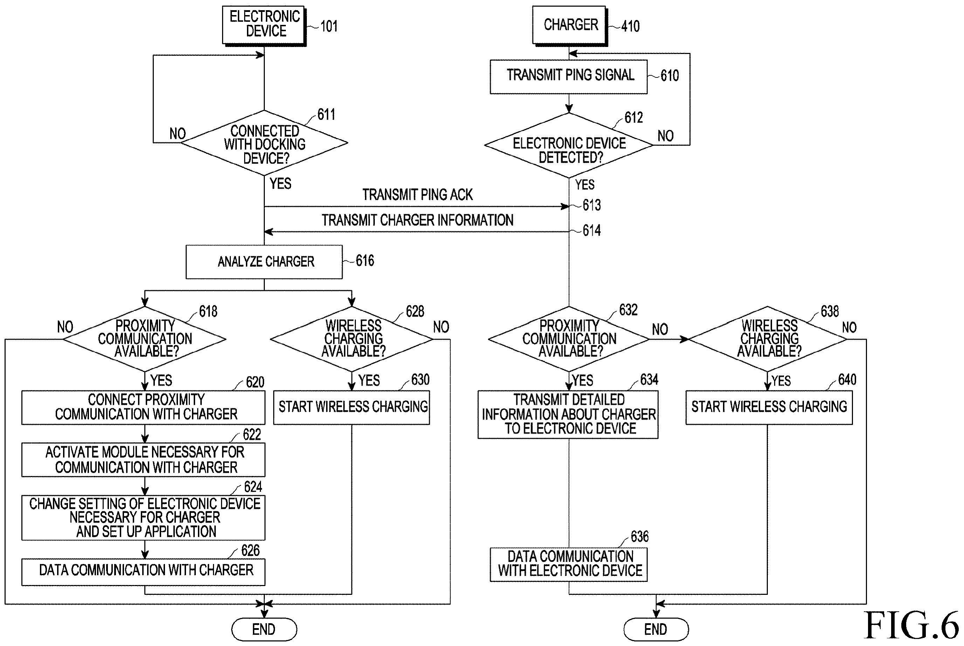

Fig. 6 is a flowchart illustrating a process for connecting a charger with an electronic device requiring charging according to various embodiments of the present invention.

A process for connecting a charger with an electronic device requiring charging, according to various embodiments of the present invention, is described below in detail with reference to Fig. 6.

According to various embodiments, the charger 410 (e.g., the controller 521) may transmit a ping signal (610). The charger 410 may periodically transmit a ping signal to detect the electronic device 101 requiring charging. The charger 410 (e.g., the controller 521) may transmit the ping signal to the electronic device 101 via the wireless charging unit 523, and the electronic device 101 (e.g., the processor 120) may receive the ping signal through the wireless charging unit 512.

According to various embodiments, the electronic device 101, upon requiring wireless charging, may be connected with the charger 410 (611), and the charger 410 (e.g., the controller 521) may detect the electronic device 101 (612). Upon requiring wireless charging, the electronic device 101 may be placed on the surface of the charger 410 to wirelessly receive power, and the charger 410 (e.g., the controller 521) may wirelessly provide power to the electronic device 101 contacting (or non-contacting) the surface. The electronic device 101 and the charger 410 may be wiredly or wirelessly connected with each other.

According to various embodiments, the electronic device 101 (e.g., the processor 120) may transmit a response signal (e.g., a ping ACK) to the charger 410 in response to the received ping signal. The electronic device 101 (e.g., the processor 120) may transmit a response signal including information indicating that charging is required to the charger 410 in response to the ping signal received from the charger 410. The electronic device 101 (e.g., the processor 120) may transmit a response signal to the ping signal transmitted from the wireless charging unit 523 of the charger 410 to the wireless charging unit 523 of the charger 410 via the wireless charging unit 512.

According to various embodiments, if the electronic device 101 is detected, the charger 410 (e.g., the controller 521) may transmit information regarding the charger to the electronic device 101 (614). The charger 410 (e.g., the controller 521) may transmit at least part of the charger-related information to the electronic device 101. The information may include at least one of whether the charger 410 is available for proximity communication, communication schemes, whether there is a memory or not, or the type of data supported by the charger 410. Upon receiving the information, the electronic device 101 (e.g., the processor 120) may determine whether proximity communication with the charger 410 is possible and whether the associated status or resource is available.

The information may contain the following information shown in Table 1 below.

**[Table 1]**

| | | | | | | | |
|---|---|---|---|---|---|---|---|
| A7 | A6 | A5 | A4 | A3 | A2 | A1 | A0 |

| | | | | | | | |
|---|---|---|---|---|---|---|---|
| A7: whether proximity communication is available (0: yes, 1: no) A6 to A5: communication scheme type (00: proximity USB, 01: WiGig, 10: DP, 11: Wi-Fi) A4: whether memory is available or not A3 to A1: type of data supported by the charger A0: reserved | | | | | | | |

According to various embodiments, the charger 410 (e.g., the controller 521) may transmit, to the electronic device 101, information containing whether the charger 410 provides proximity communication, the type of communication scheme provided by the charger 410, whether the charger 410 has a memory, and the type of data supported by the charger 410.

The type of data supported by the charger 410 is as shown in Table 2 below.

**[Table 2]**

| A3 (whether video is available) | A2 (whether audio is available) | A1 (whether input device is connectable) | type of charger |
|---|---|---|---|
| 0 | 0 | 0 | LAN |
| 0 | 0 | 1 | input device |
| 0 | 1 | 0 | audio data |
| 0 | 1 | 1 | audio data+input device |
| 1 | 0 | 0 | video data |
| 1 | 0 | 1 | video data+input device |
| 1 | 1 | 0 | video data+audio data |
| 1 | 1 | 1 | video+audio+input device |

According to various embodiments, the charger 410 (e.g., the controller 521) may transmit data as to whether the charger 410 may perform proximity communication using a total of eight data sizes, and if proximity communication is possible, may transmit data that makes it possible to determine what type of proximity communication module it has and whether it is possible. The charger 410 (e.g., the controller 521) may allow the electronic device 101 to previously recognize whether the charger is capable of data backup by transmitting the information regarding whether it has a memory.

The lowest three bits (e.g., A3 to A1) are the region to inform the electronic device 101 what data type is supported by at least one external electronic device connected with the charger 410. For example, if the charger 410 uses wired LAN, '000' may be transmitted to the electronic device 101. The electronic device 101 (e.g., the processor 120) may determine that the charger 410 is a device with LAN-related functionality, and upon performing proximity communication, the electronic device 101 (e.g., the processor 120) may initially set the functions of the charger 410 in a rapid and precise manner. Further, when the charger 410 (e.g., the controller 521) is able to process (or forward to another external electronic device) video data or voice data, the charger 410 (e.g., the controller 521) may first transmit the information to the electronic device 101 to allow the electronic device 101 (e.g., the processor 120) to first perform (or prepare for) functions related thereto.

According to various embodiments, the electronic device 101 (e.g., the processor 120) may receive information from the charger 410 and analyze the charger 410 (616). The electronic device 101 (e.g., the processor 120) may receive information from the charger 410 and determine whether the charger 410 may perform proximity communication or wireless charging. The electronic device 101 (e.g., the processor 120) may determine whether the charger 410 provides proximity communication, the type of communication scheme provided by the charger 410, whether the charger 410 has a memory, and the type of data supported by the charger 410, based on at least part of the information.

According to various embodiments, the electronic device 101 (e.g., the processor 120) may analyze the received information, and if the charger 410 may perform proximity communication (618), the electronic device 101 (e.g., the processor 120) may activate the proximity communication unit 513 to connect proximity communication with the charger 410 (620). The electronic device 101 (e.g., the processor 120) may determine whether the charger 410 may perform proximity communication. If able to perform proximity communication with the charger 410, the electronic device 101 (e.g., the processor 120) may activate the proximity communication module for transmitting/receiving data to/from the charger 410. The electronic device 101 (e.g., the processor 120) may transmit/receive data to/from the charger 410 via the activated proximity communication module. The data may be transmitted/received in a frequency range of 55GHz to 66GHz.

According to various embodiments, the electronic device 101 (e.g., the processor 120) may activate a module necessary for communication with the charger 410 (622). The electronic device 101 (e.g., the processor 120) may analyze the received information and determine what data type is supported by the charger 410. The electronic device 101 (e.g., the processor 120) may grasp at least one external electronic device connected with the charger 410 based on at least part of the information.

According to various embodiments, the electronic device 101 (e.g., the processor 120) may change settings, and execute an application, necessary for the charger 410 (624). The electronic device 101 (e.g., the processor 120) may change the settings for transmission/reception of data with the charger 410 and execute an application corresponding to the charger 410. The electronic device 101 (e.g., the processor 120) may change the settings for transmission/reception of data with at least one external electronic device and execute an application corresponding to each external electronic device.

According to various embodiments, the electronic device 101 (e.g., the processor 120) may perform data communication with the charger 410 (626). The electronic device 101 (e.g., the processor 120) may transmit/receive data to/from the charger 410 via the executed application and changed settings.

According to various embodiments, the electronic device 101 (e.g., the processor 120) may analyze the received information, determine whether the charger 410 may perform wireless charging (628), wirelessly receive power from the charger 410, and start wireless charging (630). The electronic device 101 (e.g., the processor 120) may analyze the received information, and if the charger 410 may perform wireless charging (628), the electronic device 101 (e.g., the processor 120) may wirelessly receive power from the charger 410. The electronic device 101 (e.g., the processor 120) may wirelessly receive power via its own coil and the coil of the charger 410.

According to various embodiments, after the charger 410 transmits the information in step 614, if the charger 410 can perform proximity communication (632), the charger 410 (e.g., the controller 521) may transmit detailed information about the charger 410 to the electronic device 101 (634). The charger 410 (e.g., the controller 521) may transmit the detailed information to the electronic device 101 via the wireless charging unit 523. The detailed information may include at least one of the identifier, status, specifications, authentication, or security of the charger 410.

According to various embodiments, the charger 410 (e.g., the controller 521) may perform data communication with the electronic device 101 (636). The charger 410 (e.g., the controller 521) may receive data from the electronic device 101 and forward the data to a corresponding external electronic device depending on the type of received data. Or, the charger 410 (e.g., the controller 521) may forward data received from at least one external electronic device connected to the charger 410 to the electronic device 101. Or, the charger 410 (e.g., the controller 521) may transmit data stored in its memory to the electronic device 101 or at least one external electronic device. The electronic device 101 and the charger 410 may transmit/receive data in a frequency range of 55GHz to 66GHz. Or, the data transmitted/received between the electronic device 101 and the charger 410 may include uncompressed, audio-visual data.

According to various embodiments, if the charger 410 cannot perform proximity communication (632) but can perform wireless charging (638), the charger 410 (e.g., the controller 521) may wirelessly supply power to the electronic device 101 (640). When the charger 410 does not provide proximity communication with the electronic device 101, the charger 410 (e.g., the controller 521) may wirelessly supply power to the electronic device 101, corresponding to the detection of step 612.

According to various embodiments of the present invention, a method for wirelessly providing power by a charger, the charger including a housing including a first surface facing in a first direction and a second surface facing in a second direction different from the first direction, at least part of the first surface configured to contact a surface of a first electronic device, an electrical conductive coil positioned, in the housing, closer to the first surface than to the second surface, and a charging circuit configured to receive power from an external power source and to wirelessly provide the power to the first electronic device, may comprise receiving data from the first electronic device through a wireless communication circuit having a predefined frequency range, and transmitting the received data to a second electronic device through a wired communication circuit.

According to an embodiment, the data received from the first electronic device may include uncompressed, audio-visual data.

According to an embodiment, the predefined frequency range may include a range from 55GHz to 66GHz.

According to an embodiment, the present invention may further comprise transmitting at least part of the information regarding the charger or information regarding the second electronic device connected with the charger to the first electronic device through at least one of the charging circuit or the wireless communication circuit.

According to an embodiment, the present invention may further comprise detecting the first electronic device requiring charging and transmitting a ping signal containing information regarding the charger to the first electronic device through the charging circuit.

According to an embodiment, the information regarding the charger may include at least one of whether proximity communication can be performed, communication scheme types, whether there is a memory or not, or data types supported by the charger.

According to an embodiment, the present invention may further comprise receiving a response signal to the transmitted ping signal and determining whether the first electronic device may perform proximity communication and wireless charging.

According to an embodiment, the present invention may comprise, upon determining that the first electronic device may perform proximity communication, transmitting detailed information about the charger to the first electronic device through the charging circuit.

According to an embodiment, the detailed information may include at least one of the identifier, status, specifications, authentication, or security of the charger.

According to an embodiment, the present invention may further comprise, upon detecting the first electronic device that does not require charging, transmitting the information regarding the charger to the first electronic device through the wireless communication circuit.

According to an embodiment, the present invention may further comprise receiving information containing an identifier from the at least one second electronic device, classifying the at least one second electronic device via the received identifier, and transmitting the result of the classification to the first electronic device.

According to an embodiment, the classification may include classifying the at least one second electronic device depending on priority or type.

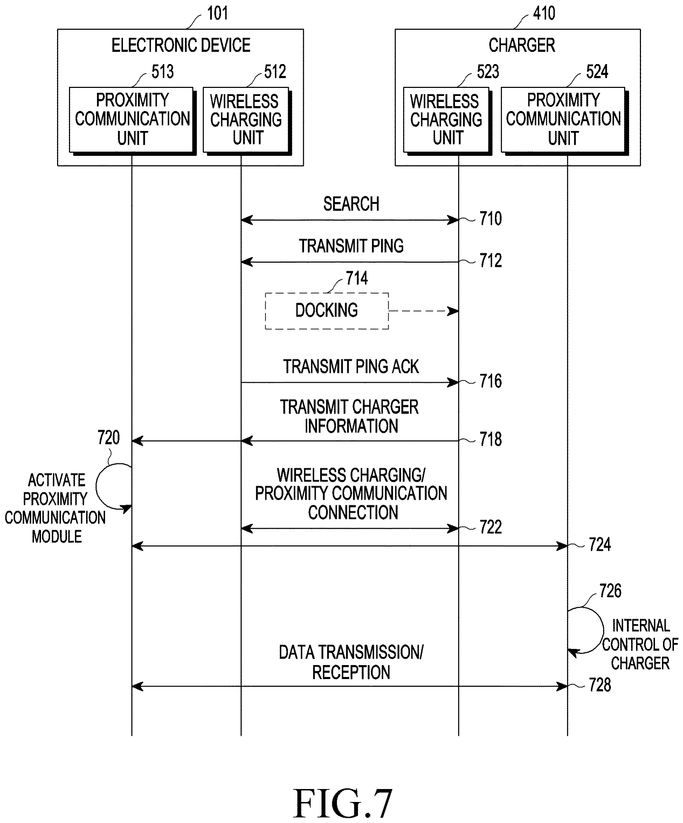

Fig. 7 is a flowchart illustrating a process for connecting a charger with an electronic device requiring charging according to various embodiments of the present invention.

A process for connecting a charger with an electronic device requiring charging, according to various embodiments of the present invention, is described below in detail with reference to Fig. 7.

According to various embodiments, the charger 410 may search for the electronic device 101 (710). The wireless charging unit 523 of the charger 410 may search for the electronic device 101.

According to various embodiments, the charger 410 may transmit a ping signal to the electronic device 101 (712). The charger 410 may transmit a ping signal to the electronic device 101 discovered. The charger 410 may transmit the ping signal to the electronic device 101 via the wireless charging unit 523, and the electronic device 101 may receive the ping signal through the wireless charging unit 512.

According to various embodiments, if the electronic device 101 and the charger 410 dock (714), the electronic device 101 may transmit a response signal to the received ping signal to the charger 410 (716). The electronic device 101 may transmit a response signal to the received ping signal to the charger 410 via the wireless charging unit 512. The electronic device 101 may transmit a response signal including information indicating that charging is required to the charger 410 in response to the ping signal received from the charger 410. The electronic device 101 may transmit a response signal to the ping signal transmitted from the wireless charging unit 523 of the charger 410 to the wireless charging unit 523 of the charger 410 via the wireless charging unit 512. The electronic device 101, upon requiring wireless charging, may be connected with the charger 410, and the charger 410 may detect the electronic device 101. Upon requiring wireless charging, the electronic device 101 may be placed on the surface of the charger 410 in order to wirelessly receive power, and the charger 410 may wirelessly provide power to the electronic device 101 contacting (or non-contacting) the surface. The electronic device 101 and the charger 410 may be wiredly or wirelessly connected with each other.

According to various embodiments, the charger 410 may transmit information about the charger 410 to the electronic device 101 (718). The charger 410 may transmit information about the charger 410 to the wireless charging unit 512 of the electronic device 101 through the wireless charging unit 523. The charger 410 may transmit at least part of the information regarding the charger to the electronic device 101 through the wireless charging unit 523. The information may include at least one of whether the charger 410 is available for proximity communication, communication schemes, whether there is a memory or not, or the type of data supported by the charger 410. The charger 410 may transmit, to the electronic device 101 through the wireless charging unit 523, information containing whether the charger 410 provides proximity communication, the type of communication scheme provided by the charger 410, whether the charger 410 has a memory, and the type of data supported by the charger 410.

According to various embodiments, the electronic device 101 may activate the proximity communication module (720). The electronic device 101 may analyze the information received through the wireless charging unit 523 of the charger 410, and if the charger 410 may perform proximity communication, the electronic device 101 may activate the proximity communication unit 513. The electronic device 101 may determine whether the charger 410 may perform proximity communication. If able to perform proximity communication with the charger 410, the electronic device 101 may activate the proximity communication module for transmitting/receiving data to/from the charger 410. The electronic device 101 may transmit/receive data to/from the charger 410 via the activated proximity communication module. The data may be transmitted/received in a frequency range of 55GHz to 66GHz. Or, the electronic device 101 may determine whether the charger 410 may perform wireless charging.

According to various embodiments, at least one of wireless charging or proximity communication may be connected between the electronic device 101 and the charger 410 (722). The wireless charging unit 512 of the electronic device 101 may connect to the wireless charging unit 523 of the charger 410. The proximity communication unit 513 of the electronic device 101 may connect to the proximity communication unit 524 of the charger 410. The electronic device 101 may receive information regarding the charger 410, which is received from the wireless charging unit 523 of the charger 410, analyze the received information, and connect with the charger 410 via at least one of wireless charging or proximity communication. The proximity communication unit 513 of the electronic device 101 may connect with the proximity communication unit 524 of the charger 410 based on at least part of the information regarding the charger 410, which has been received from the wireless charging unit 523 of the charger 410. The proximity communication unit 513 of the electronic device 101 and the proximity communication unit 524 of the charger 410 may be connected with each other in a predefined frequency range. The predefined frequency range may include a range from 55GHz to 66GHz. The wireless charging unit 512 of the electronic device 101 may connect with the wireless charging unit 523 of the charger 410 based on at least part of the information regarding the charger 410, which has been received from the wireless charging unit 523 of the charger 410.

According to various embodiments, the charger 410 may control the internal components or functions of the charger 410 (726). The charger 410 may change the settings to be able to transmit/receive data to/from the electronic device 101 in the predefined frequency range. The charger 410 may change the settings to forward data between the electronic device 101 and at least one external electronic device connected thereto.

According to various embodiments, data transmission/reception may be performed between the electronic device 101 and the charger 410 (728). The electronic device 101 may change the settings for transmission/reception of data with the charger 410 and execute an application corresponding to the charger 410. The electronic device 101 may change the settings for transmission/reception of data with at least one external electronic device and execute an application corresponding to each external electronic device. The electronic device 101 may transmit/receive data to/from the charger 410 via the executed application and changed settings. The charger 410 (e.g., the controller 521) may receive data from the electronic device 101 and forward the data to a corresponding external electronic device depending on the type of the received data. Or, the charger 410 may forward data received from at least one external electronic device connected to the charger 410 to the electronic device 101. Or, the charger 410 may transmit data stored in its memory to the electronic device 101 or at least one external electronic device. The electronic device 101 and the charger 410 may transmit/receive data in a frequency range of 55GHz to 66GHz. Or, the data transmitted/received between the electronic device 101 and the charger 410 may include uncompressed, audio-visual data.

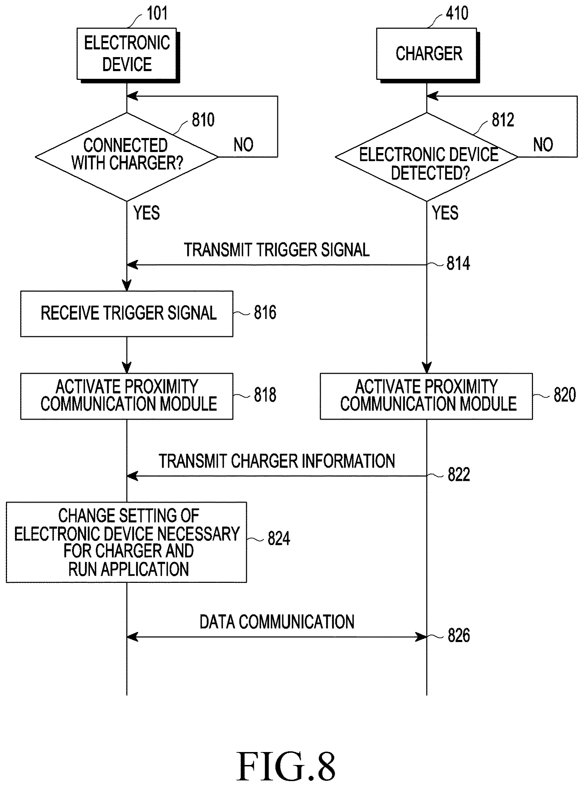

Fig. 8 is a flowchart illustrating a process for connecting a charger with an electronic device that does not require charging according to various embodiments of the present invention.

A process for connecting a charger with an electronic device that does not require charging according to various embodiments of the present invention is described below in detail with reference to Fig. 8.

According to various embodiments, the electronic device 101 may be connected with the charger 410 (810), and the charger 410 (e.g., the controller 521) may detect the electronic device 101 (812). Even though it does not require wireless charging, the electronic device 101 (e.g., the processor 120) may perform data communication with the charger 410 by being placed on the surface of the charger 410 (or placed within a predetermined distance therefrom). Times when charging is not required may include when the electronic device 101 has been fully charged or when data communication, rather than charging, is performed. The electronic device 101 and the charger 410 may be wiredly or wirelessly connected with each other. When the electronic device 101 is placed on the surface of the charger 410, the charger 410 (e.g., the controller 521) may detect the electronic device 101.

According to various embodiments, upon detecting the electronic device 101, the charger 410 (e.g., the controller 521) may transmit a trigger signal to the electronic device 101 (814). The charger 410 (e.g., the controller 521) may detect the electronic device 201 101 using at least one of BLE, a pressure sensor, a proximity sensor, a magnet, NFC, or WiGig. The charger 410 may detect the electronic device 101 in various manners other than those described above.

According to various embodiments, the electronic device 101 may receive the trigger signal from the charger 410 (816) and activate the proximity communication module (818). Upon receiving the trigger signal from the charger 410, the electronic device 101 (e.g., the processor 120) may activate the proximity communication unit 513 to perform data transmission/reception with the charger 410. If able to perform proximity communication with the charger 410, the electronic device 101 (e.g., the processor 120) may activate the proximity communication module for transmitting/receiving data to/from the charger 410. The electronic device 101 (e.g., the processor 120) may transmit/receive data to/from the charger 410 via the activated proximity communication module. The data may be transmitted/received in a frequency range of 55GHz to 66GHz. The electronic device 101 (e.g., the processor 120) may activate a module necessary for communication with the charger 410. The electronic device 101 (e.g., the processor 120) may determine what data types may be supported by the charger 410.

According to various embodiments, the charger 410 (e.g., the controller 521) may transmit the trigger signal in step 814 and activate the proximity communication module (820). The charger 410 (e.g., the controller 521) may activate the proximity communication unit 524 to transmit the trigger signal to the electronic device 101 and to perform data transmission/reception with the electronic device 101. If able to perform proximity communication with the charger 101, the charger 410 (e.g., the controller 521) may activate the proximity communication module capable of transmit/receive data to/from the electronic device 101. The charger 410 (e.g., the controller 521) may transmit/receive data to/from the electronic device 101 via the activated proximity communication module. The data may be transmitted/received in a frequency range of 55GHz to 66GHz. The charger 410 may activate a module necessary for communication with the electronic device 101.

According to various embodiments, the charger 410 (e.g., the controller 521) may transmit information regarding the charger to the electronic device 101 (822). The charger 410 (e.g., the controller 521) may transmit at least part of the charger-related information to the electronic device 101. The information may include at least one of whether the charger 410 is available for proximity communication, communication schemes, whether there is a memory or not, or the type of data supported by the charger 410. The charger 410 (e.g., the controller 521) may transmit, to the electronic device 101, information containing whether the charger 410 provides proximity communication, the type of communication scheme provided by the charger 410, whether the charger 410 has a memory, and the type of data supported by the charger 410. Such information is the same as that set forth in Tables 1 and 2 above.

According to various embodiments, the electronic device 101 (e.g., the processor 120) may change the settings of the electronic device 101, and execute an application, necessary for the charger (824). The electronic device 101 (e.g., the processor 120) may change the settings for transmission/reception of data with the charger 410 and execute an application corresponding to the charger 410. The electronic device 101 (e.g., the processor 120) may change the settings for transmission/reception of data with at least one external electronic device and execute an application corresponding to each external electronic device.

According to various embodiments, data communication may be performed between the electronic device 101 and the charger 410 (826). The electronic device 101 may transmit/receive data to/from the charger 410 via the executed application and changed settings.

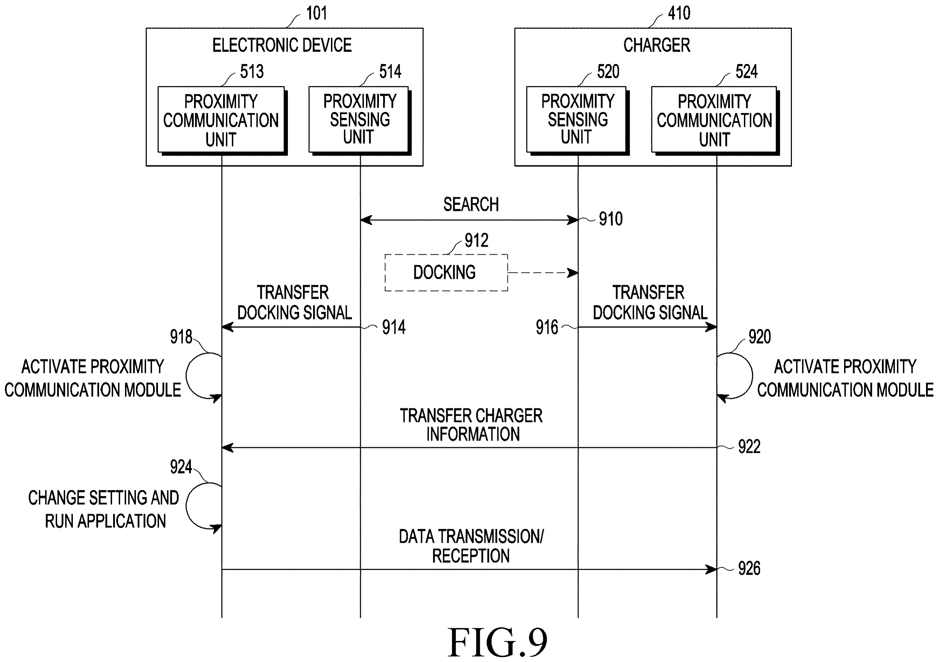

Fig. 9 is a flowchart illustrating a process for connecting a charger with an electronic device that does not require charging according to various embodiments of the present invention.

A process for connecting a charger with an electronic device that does not require charging according to various embodiments of the present invention is described below in detail with reference to Fig. 9. Times when charging is not required may include when the electronic device 101 has been fully charged or when the charger 410 does not provide power wirelessly.

According to various embodiments, the charger 410 (e.g., the controller 521) may search for the electronic device 101 (910). The proximity sensing unit 520 of the charger 410 may search for the electronic device 101. The charger 410 (e.g., the controller 521) may detect the electronic device 201 101 using at least one of BLE, a pressure sensor, a proximity sensor, a magnet, NFC, or WiGig. The charger 410 may detect the electronic device 101 in various manners other than those described above.

According to various embodiments, if the electronic device 101 and the charger 410 dock (912), the proximity sensing unit 514 of the electronic device 101 may transfer a docking signal to the proximity communication unit 513 to notify that docking has been performed (914). If docking is done, the proximity sensing unit 514 of the electronic device 101 may transfer the docking signal to activate the proximity communication unit 513.

According to various embodiments, if the electronic device 101 and the charger 410 dock (912), the proximity sensing unit 520 of the charger 410 may transfer a docking signal to the proximity communication unit 524 to notify that docking has been performed (916). If docking is done, the proximity sensing unit 520 of the charger 410 may transfer the docking signal to activate the proximity sensing unit 524.

According to various embodiments, having received the docking signal from the proximity sensing unit 514 of the electronic device 101, the proximity communication unit 513 of the electronic device 101 may activate the proximity communication module (918). The proximity communication unit 513 of the electronic device 101 may analyze the received docking signal and activate the proximity communication unit 513. If able to perform proximity communication with the charger 410, the electronic device 101 may activate the proximity communication module for transmitting/receiving data to/from the charger 410. The electronic device 101 may transmit/receive data to/from the charger 410 via the activated proximity communication module. The data may be transmitted/received in a frequency range of 55GHz to 66GHz.

According to various embodiments, having received the docking signal from the proximity sensing unit 520 of the charger 410, the proximity communication unit 524 of the charger 410 may activate the proximity communication module (920). The proximity communication unit 524 of the charger 410 may analyze the received docking signal and activate the proximity communication unit 524. If able to perform proximity communication with the electronic device 101, the charger 410 may activate the proximity communication module for transmitting/receiving data to/from the charger 101. The charger 410 may transmit/receive data to/from the electronic device 101 via the activated proximity communication module. The data may be transmitted/received in a frequency range of 55GHz to 66GHz.

According to various embodiments, the charger 410 may transmit information about the charger 410 to the electronic device 101 (922). The proximity communication unit 524 of the charger 410 may transmit at least part of the information regarding the charger to the proximity communication unit 513 of the electronic device 101. The information may include at least one of whether the charger 410 is available for proximity communication, communication schemes, whether there is a memory or not, or the type of data supported by the charger 410. The charger 410 may transmit, to the electronic device 101, information containing whether the charger 410 provides proximity communication, the type of communication scheme provided by the charger 410, whether the charger 410 has a memory, and the type of data supported by the charger 410. Such information is the same as that set forth in Tables 1 and 2 above.

According to various embodiments, the electronic device 101 may change the settings and execute the application (924). The electronic device 101 may change the settings for transmission/reception of data with the charger 410 and execute an application corresponding to the charger 410. The electronic device 101 may change the settings for transmission/reception of data with at least one external electronic device and execute an application corresponding to each external electronic device.

According to various embodiments, data communication may be performed between the electronic device 101 and the charger 410 (926). The electronic device 101 may transmit/receive data to/from the charger 410 via the executed application and changed settings.

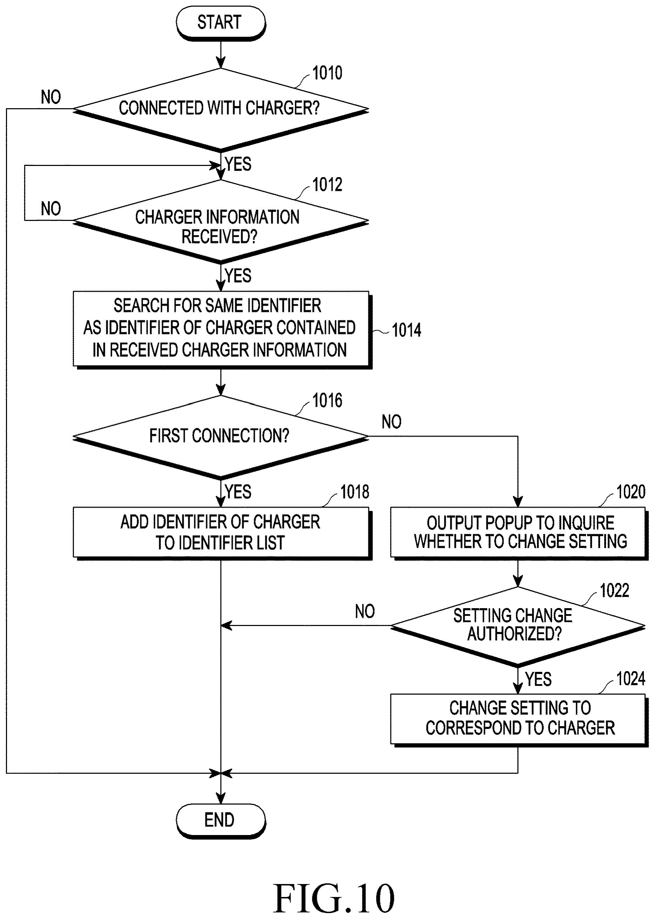

Fig. 10 is a flowchart illustrating a process for identifying an identifier of a charger by an electronic device according to various embodiments of the present invention.

A process for setting up an identifier for a charger by an electronic device 101 according to various embodiments of the present invention is described below in detail with reference to Fig. 10.

According to various embodiments, the electronic device 101 (e.g., the processor 120) may detect whether it is connected with the charger 410 (1010). The electronic device 101 (e.g., the processor 120), upon requiring wireless charging, may be connected with the charger 410, and the charger 410 (e.g., the controller 521) may detect the electronic device 101. Upon requiring wireless charging, the electronic device 101 (e.g., the processor 120) may be placed on the surface of the charger 410 to wirelessly receive power, and the charger 410 (e.g., the controller 521) may wirelessly provide power to the electronic device 101 contacting (or non-contacting) the surface. The electronic device 101 and the charger 410 may be wiredly or wirelessly connected with each other. Even though it does not require wireless charging, the electronic device 101 (e.g., the processor 120) may perform data communication with the charger 410 by being placed on the surface of the charger 410. Times when charging is not required may include when the electronic device 101 has been fully charged or when data communication, rather than charging, is to be performed. The electronic device 101 and the charger 410 may be wiredly or wirelessly connected with each other. When the electronic device 101 is placed on the surface of the charger 410, the charger 410 may detect the electronic device 101.

According to various embodiments, the electronic device 101 (e.g., the processor 120) may receive information about the charger 410 from the charger 410 (1012). The charger 410 (e.g., the controller 521) may transmit at least part of the charger-related information to the electronic device 101. The information may include at least one of whether the charger 410 is available for proximity communication, communication schemes, whether there is a memory or not, or the type of data supported by the charger 410. The charger 410 (e.g., the controller 521) may transmit, to the electronic device 101, information containing whether the charger 410 provides proximity communication, the type of communication scheme provided by the charger 410, whether the charger 410 has a memory, and the type of data supported by the charger 410. Such information is the same as that set forth in Tables 1 and 2 above. Further, the charger 410 may transmit the detailed information about the charger 410 to the electronic device 101. The charger 410 (e.g., the controller 521) may transmit the detailed information about the charger 410 to the electronic device 101. The detailed information may include at least one of the identifier, status, specifications, authentication, or security of the charger 410.

According to various embodiments, upon receiving the information about the charger 410 from the charger 410, the electronic device 101 (e.g., the processor 120) may determine whether there is the same identifier as the identifier of the charger 410 contained in the received information about the charger 410 (1014). While docking, the electronic device 101 (e.g., the processor 120) may search to determine whether the identifier of the charger 410 is among at least one charger identifier previously stored in the memory 130.

According to various embodiments, if the connection with the charger 410 is the first one (1016), the electronic device 101 (e.g., the processor 120) may add the identifier of the charger 410 to the identifier list (1018). When connected with the charger 410, the electronic device 101 (e.g., the processor 120) may store the identifier of the charger 410, thereby allowing the settings of the electronic device 101 to automatically be changed when re-connected with the charger 410 in the future.

According to various embodiments, unless the connection with the charger 410 is the first one (1016), the electronic device 101 (e.g., the processor 120) may output a popup window to inquire whether to change the settings (1020). Upon detecting the identifier of the charger 410 from the information received in step 1012, the electronic device 101 (e.g., the processor 120) may output a popup window to inquire whether to change the settings through the display 160. The popup window may, or may not, be output depending on the user's settings. Upon detecting the identifier of the charger 410 from the information received in step 1012, the electronic device 101 (e.g., the processor 120) may output a message to inquire whether to change the settings not only in the popup window, but also through a voice as well.

According to various embodiments, if changing the settings is authorized (1022), the electronic device 101 (e.g., the processor 120) may change the settings to correspond to the charger (1024). Upon receiving an input to authorize changing the settings from the user, the electronic device 101 (e.g., the processor 120) may automatically change the settings to correspond to the charger 410. The electronic device 101 (e.g., the processor 120) may change the settings for transmission/reception of data with the charger 410 and execute an application corresponding to the charger 410. The electronic device 101 (e.g., the processor 120) may change the settings for transmission/reception of data with at least one external electronic device and execute an application corresponding to each external electronic device.

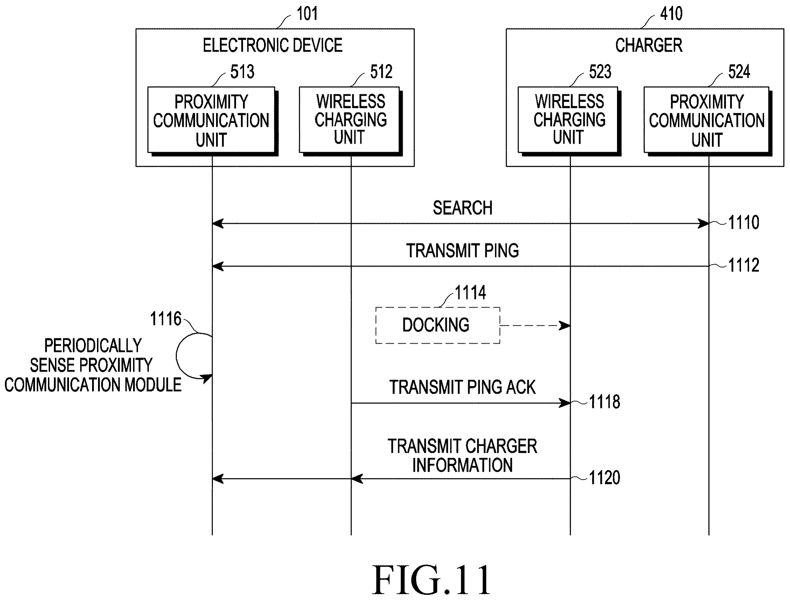

Fig. 11 is a flowchart illustrating a process for identifying an identifier of a charger by an electronic device according to various embodiments of the present invention.

A process for setting up an identifier for a charger by an electronic device 101 according to various embodiments of the present invention is described below in detail with reference to Fig. 11.

According to various embodiments, the charger 410 may search for the electronic device 101 (1110). The proximity communication unit 524 of the charger 410 may search for the electronic device 101. The charger 410 may detect the electronic device 201 101 using at least one of BLE, a pressure sensor, a proximity sensor, a magnet, NFC or WiGig. The charger 410 may detect the electronic device 101 in various manners other than those described above.

According to various embodiments, the charger 410 may transmit a ping signal to the electronic device 101 (1112). The charger 410 may transmit a ping signal to the electronic device 101 discovered. The charger 410 may transmit the ping signal to the electronic device 101 via the proximity communication unit 524, and the electronic device 101 may receive the ping signal through the proximity communication unit 513.

According to various embodiments, if the electronic device 101 and the charger 410 dock (1114), the electronic device 101 may transmit a response signal to the received ping signal to the charger 410 (1118). The electronic device 101 may activate the proximity communication module to detect information regarding the charger 410 which is to be transmitted from the charger 410 (1116). The electronic device 101 may transmit a response signal to the received ping signal to the charger 410 via the wireless charging unit 512. The electronic device 101 may transmit a response signal including information indicating that charging is required to the wireless charging unit 523 of the charger 410 in response to the ping signal received from the charger 410. The electronic device 101 may transmit a response signal to the ping signal transmitted from the wireless charging unit 523 of the charger 410 to the wireless charging unit 523 of the charger 410 via the wireless charging unit 512. The electronic device 101 and the charger 410 may be wiredly or wirelessly connected with each other.

According to various embodiments, the charger 410 may transmit information about the charger 410 to the electronic device 101 (1120). The charger 410 may transmit information about the charger 410 to the wireless charging unit 512 of the electronic device 101 through the wireless charging unit 523. The charger 410 may transmit at least part of the information regarding the charger to the electronic device 101 through the wireless charging unit 523. The wireless charging unit 512 of the electronic device 101 may transfer the received information about the charger 410 to the proximity communication unit 513. The proximity communication unit 513 may be activated when docking is done in step 1114 or when the information is received from the wireless charging unit 512. The information may include at least one of whether the charger 410 is available for proximity communication, communication schemes, whether there is a memory or not, or the type of data supported by the charger 410. The charger 410 may transmit, to the electronic device 101 through the wireless charging unit 523, information containing whether the charger 410 provides proximity communication, the type of communication scheme provided by the charger 410, whether the charger 410 has a memory, and the type of data supported by the charger 410.

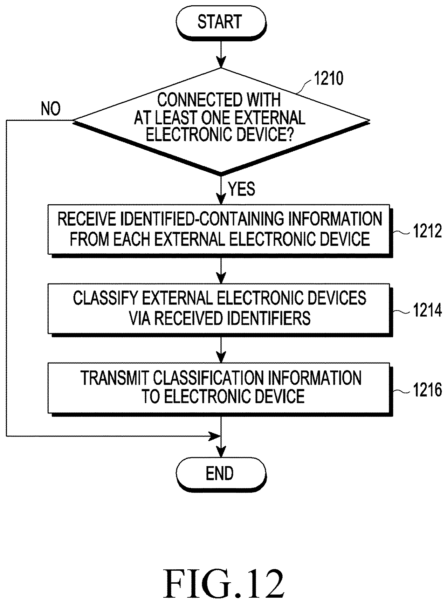

Fig. 12 is a flowchart illustrating a process for transmitting, by a charger, information from at least one external electronic device to an electronic device according to various embodiments of the present invention.

A process for transmitting, by a charger, information from at least one external electronic device to an electronic device according to various embodiments of the present invention is described below in detail.

According to various embodiments, if connected with at least one external electronic device (1210), the charger 410 may receive information containing an identifier from each external electronic device (1212). The charger 410 may wiredly or wirelessly be connected with at least one external electronic device. The charger 410 may include a USB terminal 528 for connecting with, e.g., a keyboard, mouse, or USB, or a USB/HDMI terminal for connecting with, e.g., a TV, monitor, or other video output device. The charger 410 (e.g., the controller 521) may be connected with at least one external electronic device via each terminal and may forward data, which is received from the electronic device 101, to a corresponding external electronic device depending on the type of data. Or, the charger 410 (e.g., the controller 521) may forward data received from at least one external electronic device connected thereto to the electronic device 101.

According to various embodiments, the charger 410 (e.g., the controller 521) may classify the external electronic devices with the received identifiers (1214). The charger 410 (e.g., the controller 521) may classify the at least one external electronic device with the identifier(s) received from the at least one external electronic device. The charger 410 may classify the at least one external electronic device depending on priority or type. The charger 410 may classify the external electronic devices into groups depending on the attribute (or type or product group) of the external electronic devices.

According to various embodiments, the charger 410 (e.g., the controller 521) may transmit the information of the classification to the electronic device 101 (1216). The charger 410 (e.g., the controller 521) may transmit the identifier of each external electronic device to the electronic device 101, classify them into groups depending on the attribute, and transmit the information of the classification to the electronic device 101. Upon receiving the information, the electronic device 101 (e.g., the processor 120) may identify, e.g., the type or number of the at least one external electronic device currently connected with the charger 410.

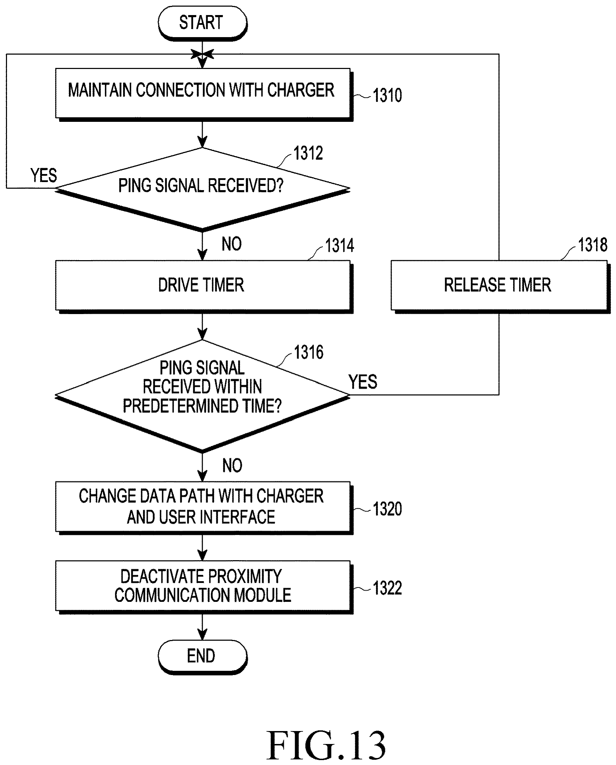

Fig. 13 is a flowchart illustrating a process for varying, by an electronic device, a data path with a charger according to various embodiments of the present invention.

The present invention allows for continuous use of prior information when the electronic device 101 and the charger 410, which used to be connected, are separated from each other for temporary use and are then coupled together. Upon failing to receive a ping signal or when the electronic device 101 moves, the electronic device 101 (e.g., the processor 120) may temporarily store data, which used to be output to an external path, and when reconnected with the charger 410, may automatically retransmit from the time of disconnection (or a few seconds before the time of disconnection). Even though it does not receive a ping ACK signal, the charger 410 may keep the proximity communication unit in active mode for a predetermined time. If failure to receive a ping ACK signal lasts for the predetermined time, the charger 410 may deactivate the communication module.

A process for changing a data path with a charger by an electronic device 101 according to various embodiments of the present invention is described below in detail with reference to Fig. 13.

According to various embodiments, the electronic device 101 (e.g., the processor 120) may remain connected with the charger 410 (1310). When wireless charging is required, the electronic device 101 (e.g., the processor 120) may be connected with the charger 410 and wirelessly receive power. Even though it does not require wireless charging, the electronic device 101 (e.g., the processor 120) may perform data communication with the charger 410 by being placed on the surface of the charger 410. Times when charging is not required may include when the electronic device 101 has been fully charged or when data communication, rather than charging, is performed. While remaining connected, the electronic device 101 may wirelessly receive power and perform data communication. While remaining connected, the electronic device 101 (e.g., the processor 120) may periodically receive a ping signal from the charger 410.

According to various embodiments, upon failing to receive a ping signal from the charger 410 (1312), the electronic device 101 (e.g., the processor 120) may drive a timer (1314). While remaining connected, the electronic device 101 (e.g., the processor 120) may periodically receive a ping signal from the charger 410. Or, upon receiving a ping signal, the electronic device 101 may drive the timer, and when another ping signal is received after the timer has been driven, the electronic device 101 may release the timer. For example, upon failing to receive a ping signal from the charger 410, the electronic device 101 (e.g., the processor 120) may drive the timer. Or, upon failing to receive a ping signal from the charger 410 within a predetermined time, the electronic device 101 may drive the timer.

According to various embodiments, upon receiving a ping signal within the predetermined time (1316), the electronic device 101 (e.g., the processor 120) may release the timer (1318). Upon receiving a ping signal within the predetermined time after the timer is driven, the electronic device 101 may release the driven timer. The timer being released corresponding to the reception of a ping signal after the timer has been driven means that the connection between the electronic device 101 and the charger 410 is maintained.

According to various embodiments, upon failing to receive a ping signal within a predetermined time (1316), the electronic device 101 (e.g., the processor 120) may change the data path with the charger 410 and the user interface (1320). The distance of arrival of the ping signal may be limited. When the distance between the electronic device 101 and the charger 410 becomes larger than the distance of arrival, the electronic device 101 may fail to receive a ping signal. As such, failing to receive a ping signal may mean that the connection between the electronic device 101 and the charger 410 is released. Upon failing to receive a ping signal within the predetermined time, the electronic device 101 (e.g., the processor 120) may change the data path with the charger 410 and the user interface. Upon failing to receive a ping signal within the predetermined time, the electronic device 101 (e.g., the processor 120) may change the data path to continue data transmission/reception with the charger 410. The electronic device 101 (e.g., the processor 120) may change the settings for transmission/reception of data with the charger 410 and execute an application corresponding to the charger 410. The electronic device 101 (e.g., the processor 120) may change the data path for transmission/reception of data with at least one external electronic device and execute an application corresponding to each external electronic device.

According to various embodiments, the electronic device 101 (e.g., the processor 120) may deactivate the proximity communication module (1322). Upon failing to receive a ping signal within the predetermined time, the electronic device 101 (e.g., the processor 120) may recognize that the connection with the charger 410 has been released and may deactivate the proximity communication module. Or, upon failing to receive a ping signal within the predetermined time, the electronic device 101 (e.g., the processor 120) may remain connected to the charger 410 via a communication module other than the proximity communication.

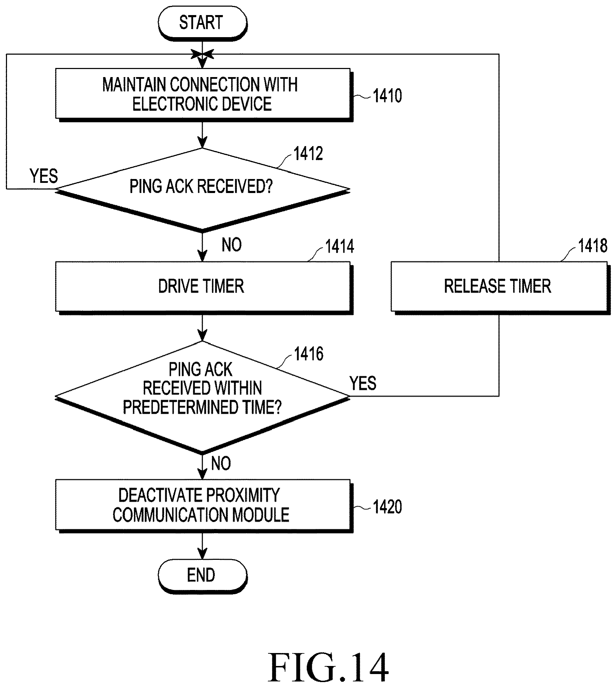

Fig. 14 is a flowchart illustrating a process for varying, by a charger, a data path with an electronic device according to various embodiments of the present invention.

A process for changing a data path with an electronic device by a charger according to various embodiments of the present invention is described below in detail with reference to Fig. 14.

According to various embodiments, the charger 410 (e.g., the controller 521) may remain connected with the electronic device 101 (1410). When the electronic device 101 requires wireless charging, the charger 410 (e.g., the controller 521) may be connected with the electronic device 101 and wirelessly provide power. Even when the electronic device 101 does not require wireless charging, the charger 410 (e.g., the controller 521) may perform data communication with the electronic device 101. Times when charging is not required may include when the electronic device 101 has been fully charged or when data communication, rather than charging, is performed. While remaining connected, the charger 410 may wirelessly provide power and perform data communication. While remaining connected, the charger 410 may periodically transmit a ping signal.

According to various embodiments, upon failing to receive a ping signal from the electronic device 101 (1412), the charger 410 (e.g., the controller 521) may drive a timer (1414). Or, upon receiving a ping ACK, the charger 410 (e.g., the controller 521) may drive the timer, and when another ping signal is received after the timer has been driven, the charger 410 (e.g., the controller 521) may release the timer. For example, upon failing to receive a ping ACK from the electronic device 101, the charger 410 (e.g., the controller 521) may drive the timer. Or, upon failing to receive a ping ACK from the electronic device 101 within a predetermined time, the charger 410 (e.g., the controller 521) may drive the timer.

According to various embodiments, upon receiving a ping ACK within the predetermined time (1416), the charger 410 (e.g., the controller 521) may release the timer (1418). Upon receiving a ping signal within the predetermined time after the timer is driven, the charger 410 (e.g., the controller 521) may release the driven timer. The timer being released corresponding to the reception of a ping ACK after the timer has been driven means that the connection between the electronic device 101 and the charger 410 is maintained.

According to various embodiments, upon failing to receive a ping ACK within the predetermined time (1416), the charger 410 (e.g., the controller 521) may recognize that the connection with the charger 410 is released and may deactivate the proximity communication module (1420). The distance of arrival of the ping ACK may be limited. When the distance between the electronic device 101 and the charger 410 becomes larger than the distance of arrival, the charger 410 may fail to receive a ping signal. As such, failing to receive a ping signal may mean that the connection between the electronic device 101 and the charger 410 is released. Upon failing to receive a ping signal within the predetermined time, the charger 410 (e.g., the controller 521) may deactivate the proximity communication module. Upon failing to receive a ping signal within the predetermined time, the charger 410 (e.g., the controller 521) may recognize that the connection with the electronic device 101 has been released and may deactivate the proximity communication module. Or, upon failing to receive a ping signal within the predetermined time, the charger 410 (e.g., the controller 521) may remain connected to the electronic device 101 via a communication module other than the proximity communication.

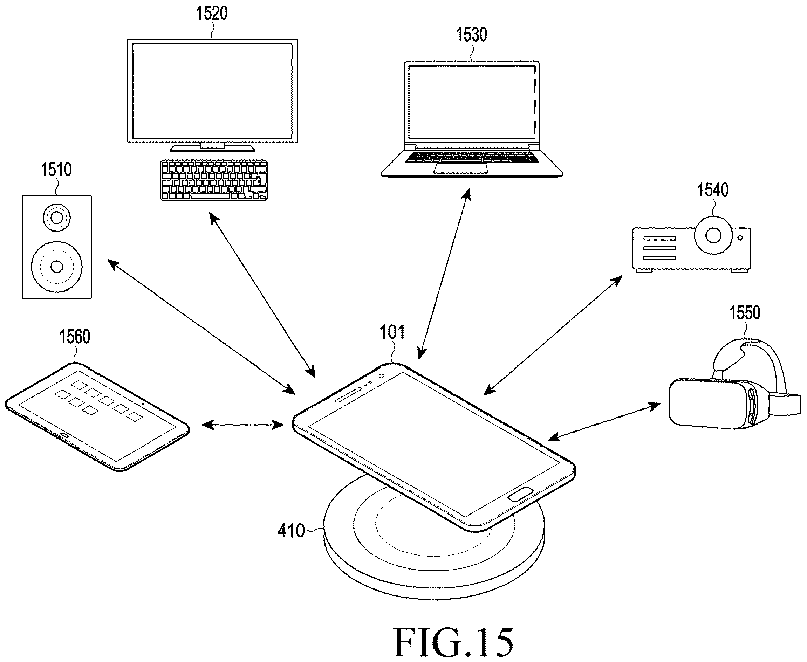

Fig. 15 is a view illustrating an example of a system for forwarding data transmitted/received between an electronic device and at least one external electronic device according to various embodiments of the present invention.

Referring to Fig. 15, according to various embodiments of the present invention, the charger 410 may wirelessly provide power to the electronic device 101. Or, the charger 410 may transmit ping signals, trigger signals, or data to the electronic device 101. The charger 410 may perform data transmission/reception with the electronic device 101 regardless of providing power to the electronic device 101. The charger 410 may wiredly or wirelessly be connected with at least one external electronic device 1510, 1520, 1530, 1540, 1550, and 1560. The charger 410 may wiredly or wirelessly be connected with the speaker 1510, computer 1520, laptop computer 1530, projector 1540, virtual reality (VR) 1550, and tablet PC 1560. The charger 410 may receive an identifier from each external electronic device. Each external electronic device may provide unique information, e.g., product number, to the charger 410, and the charger 410 may classify at least one external electronic device connected thereto via the received identifier(s). The charger 410 may group the received identifiers depending on priority or type. The charger 410 may transmit each identifier and group information to the electronic device 101. The charger 410 may forward data received from the electronic device 101 to a corresponding external electronic device and may forward data received from each external electronic device to the electronic device 101. For example, when the speaker 1510 and the projector 1540 are connected to the charger 410, the electronic device 101 may operate as a master, and the speaker 1510 and the projector 1540 may operate as slaves, and the electronic device 101 may transmit data through the charger 410 to the speaker 1510 or the projector 1540. When the computer 1520, laptop computer 1530, and tablet PC 1560 are connected to the charger 410, the electronic device 101 may operate as a master or slave, and the computer 1520, laptop computer 1530, VR 1550, and tablet PC 1560 may operate in an opposite mode of the operation mode of the electronic device 101. The electronic device 101 may transmit or receive data to/from the computer 1520, laptop computer 1530, VR 1550, and tablet PC 1560 via the charger 410. The data contains uncompressed, audio-visual data, and the predefined frequency range may include a range from 55GHz to 66GHz. Although the predefined frequency range of the present invention is specified to include a range from 55GHz to 66GHz, the predefined frequency range may include a smaller or larger frequency range.

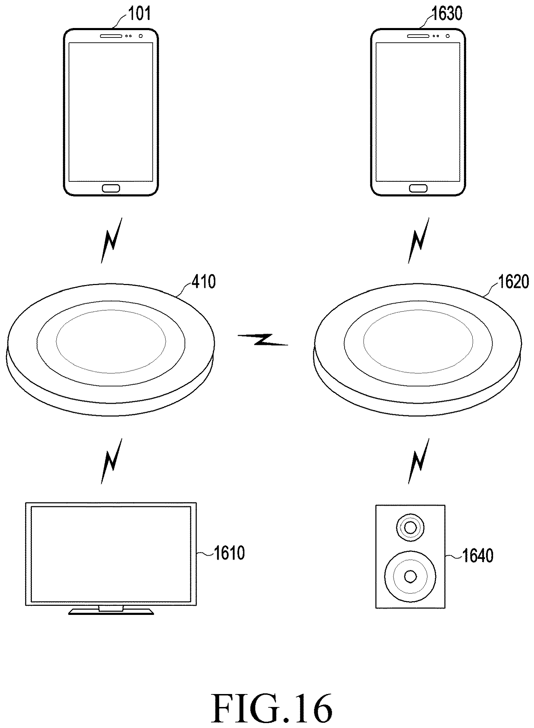

Fig. 16 is a view illustrating an example in which a charger 410 performs data communication with another charger 1620 according to various embodiments of the present invention.

Referring to Fig. 16, a first charger 410 may be connected with a first electronic device 1101 and a video playback device 1610 to transmit/receive data, and a second charger 1620 may be connected with a second electronic device 1630 and a speaker 1640 to transmit/receive voice data. The first charger 410 may be wiredly or wirelessly connected with the second charger 1620. By such a structure, each electronic device may receive data from electronic devices connected with different chargers and transmit data to the different chargers. For example, the first electronic device 101 may perform data communication with the second electronic device 1630 connected with the second charger 1620 and may output voice data to the second external electronic device 1640. Likewise, the second electronic device 1630 may perform data communication with the first electronic device 101 connected with the first charger 410 and may output video data to the first external electronic device 1610.

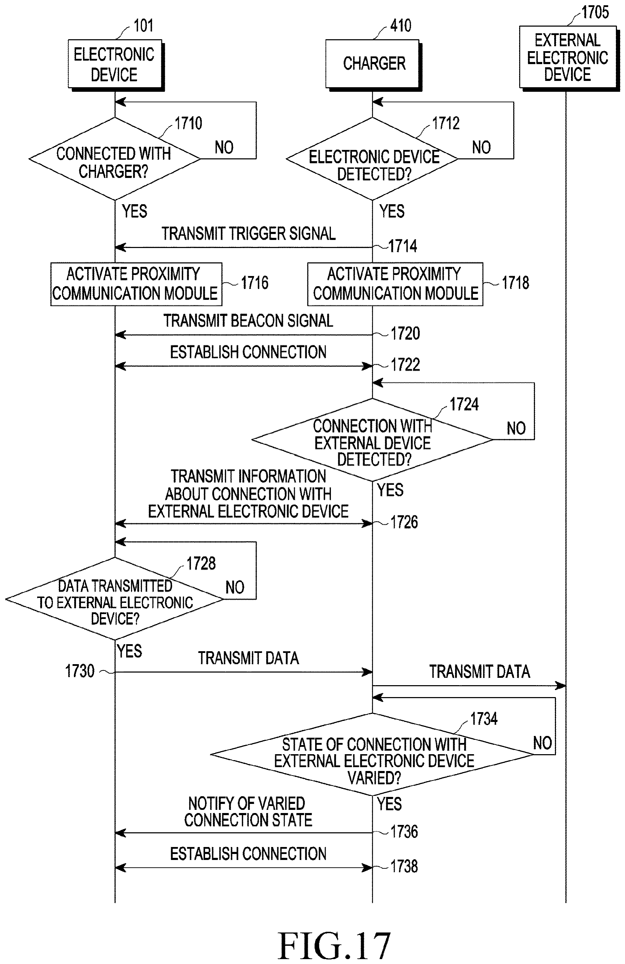

Fig. 17 is a flowchart illustrating a process in which data is transmitted/received between an electronic device and at least one external electronic device according to various embodiments of the present invention.

A process in which data is transmitted/received between an electronic device and at least one external electronic device according to various embodiments of the present invention is described below in detail with reference to Fig. 17.

According to various embodiments, the electronic device 101 may be connected with the charger 410 (1710). The charger 410 (e.g., the controller 521) may detect the electronic device 101 (1712). Even though it does not require wireless charging, the electronic device 101 (e.g., the processor 120) may perform data communication with the charger 410 by being placed on the surface of the charger 410. The electronic device 101 and the charger 410 may be wiredly or wirelessly connected with each other. When the electronic device 101 is placed on the surface of the charger 410, the charger 410 may detect the electronic device 101.

According to various embodiments, upon detecting the electronic device 101, the charger 410 (e.g., the controller 521) may transmit a trigger signal to the electronic device 101 (1714). The charger 410 (e.g., the controller 521) may detect the electronic device 201 101 using at least one of BLE, a pressure sensor, a proximity sensor, a magnet, NFC, or WiGig. The charger 410 may detect the electronic device 101 in various manners other than those described above.

According to various embodiments, upon receiving the trigger signal from the charger 410, the electronic device 101 (e.g., the processor 120) may activate the proximity communication module (1716). Upon receiving the trigger signal from the charger 410, the electronic device 101 (e.g., the processor 120) may activate the proximity communication unit 513 to perform data transmission/reception with the charger 410. The electronic device 101 (e.g., the processor 120) may transmit/receive data to/from the charger 410 via the activated proximity communication module. The data may be transmitted/received in a frequency range of 55GHz to 66GHz. The electronic device 101 may activate the module necessary for communication with the charger 410.

According to various embodiments, the charger 410 (e.g., the controller 521) may transmit the trigger signal to the electronic device 101 and activate the proximity communication module (1718). The charger 410 (e.g., the controller 521) may activate the proximity communication unit 524 to transmit the trigger signal to the electronic device 101 and to perform data transmission/reception with the electronic device 101. The charger 410 may be connected with at least one external electronic device 1710 wiredly/wirelessly or via USB. The charger 410 (e.g., the controller 521) may transmit/receive data to/from the electronic device 101 via the activated proximity communication module and transmit/receive the transmitted/received data to/from at least one external electronic device 1710. The data may be transmitted/received in a frequency range of 55GHz to 66GHz. The charger 410 (e.g., the controller 521) may activate a module necessary for communication with the electronic device 101.

According to various embodiments, the charger 410 (e.g., the controller 521) may transmit a beacon signal to the electronic device 101 (1720) and establish a connection with the electronic device 101 (1722). The electronic device 101 (e.g., the processor 120) may receive the beacon signal from the charger 410 and establish a connection with the charger 410. The charger 410 may detect connection with at least one external electronic device 1710 (1724). The external electronic device 1710 may include a keyboard 430, a mouse 431, a monitor 420, a USB 530, a speaker 1510, a tablet PC 1560, a projector 1540, and a wearable device (not shown).

According to various embodiments, upon detecting connection with at least one external electronic device (1724), the charger 410 (e.g., the controller 521) may transmit information indicating that it is connected with the external electronic device to the electronic device 101 (1726). Further, upon detecting connection with at least one external electronic device, the electronic device 101 (e.g., the processor 120) may transmit information indicating that it is connected with the external electronic device to the charger 410. The information may include information about the at least one external electronic device connected and setting information about the USB connected with the at least one external electronic device.

According to various embodiments, upon receiving an instruction to transmit data to the external electronic device selected based on the information received from the charger 410 (1728), the electronic device 101 (e.g., the processor 120) may transmit the data to the charger 410 (1730). The electronic device 101 (e.g., the processor 120) may convert the data according to the type or the data output scheme and transmit the converted data. The charger 410 (e.g., the controller 521) may transfer the data received from the electronic device 101 to the corresponding external electronic device 1710 (1731). The charger 410 (e.g., the controller 521) may convert the data according to the type or data output scheme and transmit the converted data to the external electronic device 1710.

According to various embodiments, upon detecting that the connection with the external electronic device is varied (1734), the charger 410 (e.g., the controller 521) may notify the electronic device 101 of the varied connection state (1736). The charger 410 (e.g., the controller 521) may detect the release of the connection thereto of at least one external electronic device or connection of a new external electronic device. Upon detecting a change in the connection state, the charger 410 (e.g., the controller 521) may notify the electronic device 101 of the change. The charger 410 (e.g., the controller 521) may establish a connection with the electronic device 101 (1738).

The term 'module' may refer to a unit including one of hardware, software, and firmware, or a combination thereof. The term 'module' may be interchangeably used with a unit, logic, logical block, component, or circuit. The module may be a minimum unit or part of an integrated component. The module may be a minimum unit or part of performing one or more functions. The module may be implemented mechanically or electronically. For example, the module as used herein may include at least one of Application Specific Integrated Circuit (ASIC) chips, Field Programmable Gate Arrays (FPGAs), or Programmable Logic Arrays (PLAs) that perform some operations, which have already been known or will be developed in the future.

According to an embodiment of the present invention, at least a part of the device (e.g., modules or their functions) or method (e.g., operations) may be implemented as instructions stored in a computer-readable storage medium e.g., in the form of a programming module. When the instructions are executed by a control circuit, the control circuit may perform functions corresponding to the instructions. The computer-readable storage medium may be e.g., the memory 360. At least a part of the programming module may be implemented (e.g., executed) by e.g., a control circuit. At least part of the programming module may include e.g., a module, program, routine, set of instructions, process, or the like for performing one or more functions.

The computer-readable recording medium may include a magnetic medium, such as a hard disk, a floppy disk, and a magnetic tape, an optical recording medium, such as a compact disc-read only memory (CD-ROM) or digital video disc (DVD), a magnetic-optical medium, such as a floptical disc, and a hardware device specially configured to store and execute program instructions (e.g., a programming module), such as a read only memory (ROM), random access memory (RAM), or flash memory. Examples of the program commands may include not only machine language codes but also high-level language codes which are executable by various computing means using an interpreter. The aforementioned hardware devices may be configured to operate as one or more software modules to carry out exemplary embodiments of the present invention, and vice versa.

Modules or programming modules in accordance with various embodiments of the present invention may include at least one or more of the aforementioned components, omit some of them, or further include other additional components. Operations performed by modules, programming modules or other components in accordance with various embodiments of the present invention may be carried out sequentially, simultaneously, repeatedly, or heuristically. Furthermore, some of the operations may be performed in a different order, or omitted, or include other additional operation(s).

The embodiments herein are provided merely for better understanding of the present invention, and the present invention should not be limited thereto or thereby. It should be appreciated by one of ordinary skill in the art that various changes in form or detail may be made to the embodiments without departing from the scope of the present disclosure defined by the following claims.

## Claims

1. A charger, comprising:
a housing including a first surface facing in a first direction and a second surface facing in a second direction different from the first direction, wherein at least part of the first surface contacts a surface of a first electronic device;
a wireless charging unit including an electrically conductive coil positioned, in the housing, closer to the first surface than to the second surface and a charging circuit configured to receive power from an external power source and to wirelessly provide the power through the coil and the first surface to the first electronic device;
an electrical connector exposed from the housing;
a communication unit including a wireless communication circuit configured to support wireless communication having a predefined frequency range with the first electronic device and receive data from the first electronic device, and a wired communication circuit configured to transmit the data to at least one second electronic device via the connector; and
a processor configured to overall control operations of the charger to provide wireless charging to the first electronic device.

2. The charger of claim 1, wherein the charger does not include a display unit configured to display an image.

3. The charger of claim 1, wherein the data received from the first electronic device includes uncompressed, audio-visual data.

4. The charger of claim 1, wherein the processor is configured to transmit at least part of information regarding the charger or information regarding the second electronic device connected with the charger to the first electronic device through at least one of the wireless charging unit or the communication unit.

5. The charger of claim 1, wherein upon detecting the first electronic device requiring charging, the wireless charging unit is configured to transmit a ping signal containing information regarding the charger to the first electronic device.

6. The charger of claim 5, wherein the processor is configured to determine whether the first electronic device may perform proximity communication and wireless charging, corresponding to receiving a signal responsive to the transmitted ping signal.

7. The charger of claim 1, wherein upon detecting the first electronic device not requiring charging, the processor is configured to transmit information regarding the charger to the first electronic device through the communication unit.

8. The charger of claim 1, wherein upon receiving information containing an identifier corresponding to connection with the at least one second electronic device, the processor is configured to classify the at least one second electronic device via the received identifier and to transmit a result of the classification to the first electronic device.

9. The charger of claim 8, wherein the processor is configured to classify the at least one connected second electronic device depending on priority or type.

10. The charger of claim 1, wherein upon failing to receive, from the first electronic device, a signal responsive to a transmitted ping signal within a predetermined time while remaining connected with the first electronic device, the processor is configured to deactivate proximity communication with the first electronic device.

11. A method for wirelessly providing power by a charger, the charger including a housing including a first surface facing in a first direction and a second surface facing in a second direction different from the first direction, at least part of the first surface configured to contact a surface of a first electronic device, an electrical conductive coil positioned, in the housing, closer to the first surface than to the second surface, and a charging circuit configured to receive power from an external power source and to wirelessly provide the power to the first electronic device, the method comprising:
receiving data from the first electronic device through a wireless communication circuit having a predefined frequency range; and
transmitting the received data to a second electronic device through a wired communication circuit.

12. The method of claim 11, wherein the data received from the first electronic device includes uncompressed, audio-visual data.

13. The method of claim 11, further comprising transmitting at least part of information regarding the charger or information regarding the second electronic device connected with the charger to the first electronic device through at least one of the charging circuit or the wireless communication circuit.

14. The method of claim 11, further comprising:
detecting the first electronic device requiring charging; and
transmitting a ping signal containing information regarding the charger to the first electronic device through the charging circuit.

15. An electronic device, comprising:
a display;
a sensor unit including at least one sensor;
a wireless charging unit including a charging circuit configured to wirelessly receive power from a charger;
a communication unit configured to transmit data to the charger through a wireless communication circuit configured to support wireless communication having a predefined frequency range with the charger; and
a processor configured to change a setting to correspond to the charger through information received from the charger.
